# EUROPEAN PATENT APPLICATION

(11) **EP 4 845 077 A1**
(43) Date of publication of application: **25.11.2026**
(21) Application number: 24917804.7
(22) Date of filing: 19.01.2024
(51) Int. Cl.: H04L 5/00

(54) **COMMUNICATION METHODS AND APPARATUSES, AND TERMINAL, NETWORK DEVICE, COMMUNICATION SYSTEM AND MEDIUM**

(71) Applicant: Beijing Xiaomi Mobile Software Co., Ltd., Beijing 100085 (CN)
(72) Inventor: LIU, Zhengxuan, Beijing 100085 (CN)
(74) Representative: Stöckeler, Ferdinand
(86) International application number: PCT/CN2024/073356
(87) International publication number: WO 2025/152181

(57) **Abstract**

The present disclosure relates to communication methods and apparatuses, and a terminal, a network device, a communication system and a medium. A communication method comprises: a terminal receiving configuration information sent by a network device, wherein the configuration information is used for configuring Kₛ CSI-RS resources, Kₛ being an integer greater than 1; and the terminal sending first information to the network device, wherein the first information comprises CSI-RS resource indication information, the CSI-RS resource indication information is used for indicating Nₜₒₜ CSI-RS resources selected by the terminal, and the first information further comprises PMIs corresponding to the Nₜₒₜ CSI-RS resources, Nₜₒₜ being an integer greater than 1, and Nₜₒₜ being less than or equal to Kₛ. In an embodiment of the present disclosure, a terminal selects two or more CSI-RS resources from among Kₛ CSI-RS resources configured by a network device, and reports indication information of the selected CSI-RS resources and corresponding PMIs to the network device.

## Description

### TECHNICAL FIELD

The disclosure relates to the field of communication technologies, and in particular to a communication method, a communication apparatus, a terminal, a network device, a communication system, and a medium.

### BACKGROUND

In a procedure of reporting channel state information (CSI), a user equipment (UE) determines at least one of indication information such as a rank indicator (RI), a precoding matrix indicator (PMI), or a channel quality indicator (CQI) correspondingly based on a channel state information-reference signal (CSI-RS) resource, and reports the at least one of the indication information to a network side.

### SUMMARY

Embodiments of the disclosure provide a communication method, a communication apparatus, a terminal, a network device, a communication system, and a medium.

According to a first aspect of the embodiments of the disclosure, a communication method is provided. The communication method is performed by a terminal, including:
receiving configuration information sent from a network device, in which the configuration information is used to configure Kₛ channel state information-reference signal (CSI-RS) resources, in which Kₛ is an integer greater than 1; and
sending first information to the network device, in which the first information includes CSI-RS resource indication information, the CSI-RS resource indication information indicates Nₜₒₜ CSI-RS resources selected by the terminal, and the first information also includes precoding matrix indicators (PMIs) corresponding to the Nₜₒₜ CSI-RS resources respectively, in which Nₜₒₜ is an integer greater than 1 and Nₜₒₜ is less than or equal to Kₛ.

According to a second aspect of the embodiments of the disclosure, a communication method is provided. The method is performed by a network device, including:
sending configuration information to a terminal, in which the configuration information is used to configure Kₛ CSI-RS resources, in which Kₛ is an integer greater than 1; and
receiving first information sent from the terminal, in which the first information includes CSI-RS resource indication information, the CSI-RS resource indication information indicates Nₜₒₜ CSI-RS resources selected by the terminal, and the first information also includes PMIs corresponding to the Nₜₒₜ CSI-RS resources respectively, in which Nₜₒₜ is an integer greater than 1 and Nₜₒₜ is less than or equal to Kₛ.

According to a third aspect of the embodiments of the disclosure, a communication apparatus is provided. The communication apparatus includes:
a transceiver module, configured to receive configuration information sent from a network device, in which the configuration information is used to configure Kₛ CSI-RS resources, in which Kₛ is an integer greater than 1.

The transceiver module is also configured to send first information to the network device, in which the first information includes CSI-RS resource indication information, the CSI-RS resource indication information indicates Nₜₒₜ CSI-RS resources selected by the terminal, and the first information further includes PMIs corresponding to the Nₜₒₜ CSI-RS resources respectively, in which Nₜₒₜ is an integer greater than 1 and Nₜₒₜ is less than or equal to Kₛ.

According to a fourth aspect of the embodiments of the disclosure, a communication apparatus is provided. The communication apparatus includes:
a transceiver module, configured to send configuration information to a terminal, in which the configuration information is used to configure Kₛ CSI-RS resources, in which Kₛ is an integer greater than 1; and
the transceiver module is further configured to receive first information sent from a terminal, in which the first information includes CSI-RS resource indication information, the CSI-RS resource indication information indicates Nₜₒₜ CSI-RS resources selected by the terminal, and the first information also includes PMIs corresponding to the Nₜₒₜ CSI-RS resources respectively, in which Nₜₒₜ is an integer greater than 1 and Nₜₒₜ is less than or equal to Kₛ.

According to a fifth aspect of the embodiments of the disclosure, a terminal is provided. The terminal includes:
one or more processors;
in which the terminal is configured to perform the communication method provided in the first aspect of the embodiments of the disclosure.

According to a sixth aspect of the embodiments of the disclosure, a network device is provided. The network device includes:
one or more processors;
in which the network device is configured to perform the communication method provided in the second aspect of the embodiments of the disclosure.

According to a seventh aspect of the embodiments of the disclosure, a communication system is provided. The communication system includes: a terminal and a network device. The terminal is configured to implement the communication method provided in the first aspect of the embodiments of the disclosure, and the network device is configured to implement the communication method provided in the second aspect of the embodiments of the disclosure.

According to an eighth aspect of the embodiments of the disclosure, a storage medium is provided. The storage medium stores instructions. When the instructions are run on a communication device, the communication device is caused to perform the communication method provided in the first aspect or the second aspect of the embodiments of the disclosure.

In embodiments of the disclosure, the network device configures the Kₛ CSI-RS resources for the terminal, and the terminal selects two or more CSI-RS resources and reports indication information and corresponding PMIs of the selected CSI-RS resources to the network device.

### BRIEF DESCRIPTION OF THE DRAWINGS

In order to more clearly illustrate technical solutions in embodiments of the disclosure, accompanying drawings required for describing the embodiments are introduced below. The following accompanying drawings are merely some embodiments of the disclosure and do not specifically limit the scope of protection of the disclosure.
FIG. 1 is a schematic diagram illustrating an architecture of a communication system according to an embodiment of the disclosure.
FIG. 2 is an interaction flow chart illustrating a communication method according to an embodiment of the disclosure.
FIG. 3 is a flow chart illustrating a communication method according to an embodiment of the disclosure.
FIG. 4 is a flow chart illustrating a communication method according to an embodiment of the disclosure.
FIG. 5 is an interaction flow chart illustrating a communication method according to an embodiment of the disclosure.
FIG. 6A is a block diagram illustrating a communication apparatus according to an embodiment of the disclosure.
FIG. 6B is a block diagram illustrating a communication apparatus according to an embodiment of the disclosure.
FIG. 7A is a block diagram illustrating a communication device according to an embodiment of the disclosure.
FIG. 7B is a block diagram illustrating a chip according to an embodiment of the disclosure.

### DETAILED DESCRIPTION

Embodiments of the disclosure provide a communication method, a communication apparatus, a terminal, a network device, a communication system, and a medium.

In a first aspect, embodiments of the disclosure provide a communication method. The method is performed by a terminal, including:
receiving configuration information sent from a network device, in which the configuration information is used to configure Kₛ channel state information-reference signal (CSI-RS) resources, in which Kₛ is an integer greater than 1; and
sending first information to the network device, in which the first information includes CSI-RS resource indication information, the CSI-RS resource indication information indicates Nₜₒₜ CSI-RS resources selected by the terminal, and the first information also includes precoding matrix indicators (PMIs) corresponding to the Nₜₒₜ CSI-RS resources respectively, in which Nₜₒₜ is an integer greater than 1 and Nₜₒₜ is less than or equal to Kₛ.

In the above embodiments, the network device configures the Kₛ CSI-RS resources for the terminal, and the terminal selects two or more CSI-RS resources and reports indication information and corresponding PMIs of the selected CSI-RS resources to the network device.

In combination with some embodiments of the first aspect, in some embodiments, the PMIs corresponding to the Nₜₒₜ CSI-RS resources include at least one of:
second information, indicating the same spatial domain basis vector in a first dimension and a second dimension corresponding to the Nₜₒₜ CSI-RS resources;
third information, indicating the same spatial domain basis vector in a first dimension and a second dimension corresponding to M₁ CSI-RS resources in the Nₜₒₜ CSI-RS resources;
fourth information, indicating spatial domain basis vectors in a first dimension and a second dimension respectively corresponding to remaining CSI-RS resources other than M₁ CSI-RS resources in the Nₜₒₜ CSI-RS resources; or
fifth information, indicating CSI-RS resources with the same spatial domain basis vector in a first dimension and a second dimension in the Nₜₒₜ CSI-RS resources.

In the above embodiments, a feedback overhead of the terminal for the spatial domain basis vector may be reduced in a case that a system performance remains unchanged.

In combination with some embodiments of the first aspect, in some embodiments, the PMIs corresponding to the Nₜₒₜ CSI-RS resources include at least one of:
sixth information, indicating the same spatial domain basis vector in a first dimension corresponding to the Nₜₒₜ CSI-RS resources;
seventh information, indicating the same spatial domain basis vector in a first dimension corresponding to M₂ CSI-RS resources in the Nₜₒₜ CSI-RS resources;
eighth information, indicating spatial domain basis vectors in a first dimension respectively corresponding to remaining CSI-RS resources other than M₂ CSI-RS resources in the Nₜₒₜ CSI-RS resources; or
ninth information, indicating CSI-RS resources with the same spatial domain basis vector in a first dimension in the Nₜₒₜ CSI-RS resources.

In the above embodiments, the feedback overhead of the terminal for the spatial domain basis vector may be reduced in a case that the system performance remains unchanged.

In combination with some embodiments of the first aspect, in some embodiments, the PMIs corresponding to the Nₜₒₜ CSI-RS resources include at least one of:
tenth information, indicating the same spatial domain basis vector in a second dimension corresponding to the Nₜₒₜ CSI-RS resources;
eleventh information, indicating the same spatial domain basis vector in a second dimension corresponding to M₃ CSI-RS resources in the Nₜₒₜ CSI-RS resources;
twelfth information, indicating spatial domain basis vectors in a second dimension respectively corresponding to remaining CSI-RS resources other than M₃ CSI-RS resources in the Nₜₒₜ CSI-RS resources; or
thirteenth information, indicating CSI-RS resources with the same spatial domain basis vector in a second dimension in the Nₜₒₜ CSI-RS resources.

In the above embodiments, the feedback overhead of the terminal for the spatial domain basis vector may be reduced in a case that the system performance remains unchanged.

In combination with some embodiments of the first aspect, in some embodiments, the PMIs corresponding to the Nₜₒₜ CSI-RS resources also include:
fourteenth information, indicating whether a spatial domain basis vector in a first dimension corresponding to each of the Nₜₒₜ CSI-RS resources is the same as a spatial domain basis vector in a second dimension corresponding to the CSI-RS resource.

In the above embodiments, by indicating whether the spatial domain basis vector in the first dimension and the spatial domain basis vector in the second dimension corresponding to each CSI-RS resource are the same, the terminal may indicate spatial domain basis vectors in two dimensions via one spatial domain basis vector in the first dimension and the second dimension in a case that the spatial domain basis vector in the first dimension and the spatial domain basis vector in the second dimension corresponding to each CSI-RS resource (or a part of CSI-RS resources) are the same, thus reducing the feedback overhead of the terminal.

In combination with some embodiments of the first aspect, in some embodiments, the PMIs corresponding to the Nₜₒₜ CSI-RS resources include at least one of:
fifteenth information, indicating same spatial domain basis vector offset information corresponding to the Nₜₒₜ CSI-RS resources;
sixteenth information, indicating same spatial domain basis vector offset information corresponding to M₄ CSI-RS resources in the Nₜₒₜ CSI-RS resources;
seventeenth information, indicating spatial domain basis vector offset information respectively corresponding to remaining CSI-RS resources other than M₄ CSI-RS resources in the Nₜₒₜ CSI-RS resources; or
eighteenth information, indicating CSI-RS resources with same spatial domain basis vector offset information in the Nₜₒₜ CSI-RS resources.

In the above embodiments, the feedback overhead of the terminal for the spatial domain basis vector offset information may be reduced in a case that the system performance remains unchanged.

In combination with some embodiments of the first aspect, in some embodiments, the PMIs corresponding to the Nₜₒₜ CSI-RS resources include at least one of:
nineteenth information, indicating same phase offset information corresponding to the Nₜₒₜ CSI-RS resources, the phase offset information including a phase offset between adjacent panels in N_{g} panels;
twentieth information, indicating same phase offset information corresponding to M₅ CSI-RS resources in the Nₜₒₜ CSI-RS resources; or
twenty-first information, indicating CSI-RS resources with same phase offset information in the Nₜₒₜ CSI-RS resources.

In the above embodiments, the feedback overhead of the terminal for the phase offset information may be reduced in a case that the system performance remains unchanged.

In combination with some embodiments of the first aspect, in some embodiments, one CSI-RS resource corresponds to one spatial domain basis vector group, and the PMIs corresponding to the Nₜₒₜ CSI-RS resources include:
twenty-second information, indicating the same spatial domain basis vector group corresponding to the Nₜₒₜ CSI-RS resources, the spatial domain basis vector group being used to select L spatial domain basis vectors;
and the PMIs corresponding to the Nₜₒₜ CSI-RS resources further include at least one of:
   twenty-third information, indicating L spatial domain basis vectors corresponding to each of the Nₜₒₜ CSI-RS resources based on the spatial domain basis vector group;
   twenty-fourth information, indicating same L spatial domain basis vectors corresponding to the Nₜₒₜ CSI-RS resources based on the spatial domain basis vector group;
   twenty-fifth information, indicating whether Nₜₒₜ groups each including L spatial domain basis vectors corresponding to the Nₜₒₜ CSI-RS resources are the same;
   twenty-sixth information, indicating same L spatial domain basis vectors corresponding to M₆ CSI-RS resources in the Nₜₒₜ CSI-RS resources based on the spatial domain basis vector group;
   twenty-seventh information, indicating L spatial domain basis vectors corresponding to each of remaining CSI-RS resources other than M₆ CSI-RS resources in the Nₜₒₜ CSI-RS resources based on the spatial domain basis vector group;
   twenty-eighth information, indicating same L' spatial domain basis vectors in Nₜₒₜ groups each including L spatial domain basis vectors corresponding to the Nₜₒₜ CSI-RS resources based on the spatial domain basis vector group, the L' spatial domain basis vectors being included in each group, and remaining L-L' spatial domain basis vectors corresponding to each of the Nₜₒₜ CSI-RS resources, and indicating a value of L';
   twenty-ninth information, indicating same L' spatial domain basis vectors in M₇ groups each including L spatial domain basis vectors corresponding to M₇ CSI-RS resources in the Nₜₒₜ CSI-RS resources based on the spatial domain basis vector group, the L' spatial domain basis vectors being included in each group, and remaining L-L' spatial domain basis vectors corresponding to each of the M₇ CSI-RS resources, and indicating a value of L';
   thirtieth information, indicating L spatial domain basis vectors corresponding to each of remaining CSI-RS resources other than M₇ CSI-RS resources in the Nₜₒₜ CSI-RS resources based on the spatial domain basis vector group; or
   thirty-first information, indicating CSI-RS resources corresponding to same L spatial domain basis vectors in the Nₜₒₜ CSI-RS resources.

In the above embodiments, the feedback overhead of the terminal for the selected L spatial domain basis vectors may be reduced in a case that the system performance remains unchanged.

In combination with some embodiments of the first aspect, in some embodiments, one CSI-RS resource corresponds to one spatial domain basis vector group, and the PMIs corresponding to the Nₜₒₜ CSI-RS resources include:
thirty-second information, indicating the same spatial domain basis vector group corresponding to M₈ CSI-RS resources in the Nₜₒₜ CSI-RS resources, the spatial domain basis vector group being used to select L spatial domain basis vectors; and
thirty-third information, indicating CSI-RS resources corresponding to the same spatial domain basis vector group in the Nₜₒₜ CSI-RS resources;
and the PMIs corresponding to the Nₜₒₜ CSI-RS resources also include at least one of:
   thirty-fourth information, indicating L spatial domain basis vectors corresponding to each of the M₈ CSI-RS resources based on the spatial domain basis vector group;
   thirty-fifth information, indicating same L spatial domain basis vectors corresponding to the M₈ CSI-RS resources based on the spatial domain basis vector group;
   thirty-sixth information, indicating whether M₈ groups each including L spatial domain basis vectors corresponding to the M₈ CSI-RS resources are the same;
   thirty-seventh information, indicating same L spatial domain basis vectors corresponding to M₉ CSI-RS resources in the M₈ CSI-RS resources based on the spatial domain basis vector group;
   thirty-eighth information, indicating L spatial domain basis vectors corresponding to each of remaining CSI-RS resources other than M₉ CSI-RS resources in the M₈ CSI-RS resources based on the spatial domain basis vector group;
   thirty-ninth information, indicating same L' spatial domain basis vectors in M₈ groups each including L spatial domain basis vectors corresponding to the M₈ CSI-RS resources based on the spatial domain basis vector group, the L' spatial domain basis vectors being included in each group, remaining L-L' spatial domain basis vectors corresponding to each of the M₈ CSI-RS resources, and indicating a value of L';
   fortieth information, indicating same L' spatial domain basis vectors in M₁₀ groups each including L spatial domain basis vectors corresponding to M₁₀ CSI-RS resources in the M₈ CSI-RS resources based on the spatial domain basis vector group, the L' spatial domain basis vectors being included in each group, remaining L-L' spatial domain basis vectors corresponding to each of the M₁₀ CSI-RS resources, and indicating a value of L';
   forty-first information, indicating L spatial domain basis vectors corresponding to each of remaining CSI-RS resources other than M₁₀ CSI-RS resources in the M₈ CSI-RS resources based on the spatial domain basis vector group;
   forty-second information, indicating CSI-RS resources corresponding to same L spatial domain basis vectors in M₈ CSI-RS resources; or
   forty-third information, indicating a spatial domain basis vector group corresponding to each of remaining CSI-RS resources other than M₈ CSI-RS resources in the Nₜₒₜ CSI-RS resources, and indicating L spatial domain basis vectors corresponding to each of the remaining CSI-RS resources based on the spatial domain basis vector group corresponding to each of the remaining CSI-RS resources.

In the above embodiments, the feedback overhead of the terminal for the selected L spatial domain basis vectors may be reduced in a case that the system performance remains unchanged.

In combination with some embodiments of the first aspect, in some embodiments, the PMIs corresponding to the Nₜₒₜ CSI-RS resources include:
forty-fourth information, indicating same L' spatial domain basis vectors in Nₜₒₜ groups each including L spatial domain basis vectors corresponding to the Nₜₒₜ CSI-RS resources, the L' spatial domain basis vectors being included in each group, remaining L-L' spatial domain basis vectors corresponding to each of the Nₜₒₜ CSI-RS resources, and indicating a value of L'.

In the above embodiments, the feedback overhead of the terminal for the selected L spatial domain basis vectors may be reduced in a case that the system performance remains unchanged.

In combination with some embodiments of the first aspect, in some embodiments, the PMIs corresponding to the Nₜₒₜ CSI-RS resources include at least one of:
forty-fifth information, indicating same Mᵥ' frequency domain basis vectors in Nₜₒₜ groups each including Mᵥ frequency domain basis vectors corresponding to the Nₜₒₜ CSI-RS resources, the Mᵥ' frequency domain basis vectors being included in each group, remaining frequency domain basis vectors other than the Mᵥ' frequency domain basis vectors corresponding to each of the Nₜₒₜ CSI-RS resources, and indicating a value of Mᵥ';
forty-sixth information, indicating same Mᵥ frequency domain basis vectors corresponding to M₁₁ CSI-RS resources in the Nₜₒₜ CSI-RS resources;
forty-seventh information, indicating Mᵥ frequency domain basis vectors corresponding to each of remaining CSI-RS resources other than the M₁₁ CSI-RS resources in the Nₜₒₜ CSI-RS resources;
forty-eighth information, indicating a start point of a frequency domain basis vector window; or
forty-ninth information, indicating Mᵥ frequency domain basis vectors corresponding to each of the Nₜₒₜ CSI-RS resources based on a start point of a frequency domain basis vector window, a length of the frequency domain basis vector window being lower than a number N₃ of subbands.

In the above embodiments, the feedback overhead of the terminal for the selected Mᵥ frequency domain basis vectors may be reduced in a case that the system performance remains unchanged.

In combination with some embodiments of the first aspect, in some embodiments, one CSI-RS resource corresponds to one frequency domain basis vector window;
and the PMIs corresponding to the Nₜₒₜ CSI-RS resources include at least one of:
fiftieth information, indicating the same start point of frequency domain basis vector windows respectively corresponding to the Nₜₒₜ CSI-RS resources;
fifty-first information, indicating Mᵥ frequency domain basis vectors corresponding to each of the Nₜₒₜ CSI-RS resources based on the same start point corresponding to the Nₜₒₜ CSI-RS resources;
fifty-second information, indicating same Mᵥ' frequency domain basis vectors in Nₜₒₜ groups each including Mᵥ frequency domain basis vectors corresponding to the Nₜₒₜ CSI-RS resources based on the same start point corresponding to the Nₜₒₜ CSI-RS resources, the Mᵥ' frequency domain basis vectors being included in each group, remaining frequency domain basis vectors other than the Mᵥ' frequency domain basis vectors corresponding to each of the Nₜₒₜ CSI-RS resources, and indicating a value of Mᵥ';
fifty-third information, indicating same Mᵥ frequency domain basis vectors corresponding to the Nₜₒₜ CSI-RS resources based on the same start point corresponding to the Nₜₒₜ CSI-RS resources;
fifty-fourth information, indicating the same start point of frequency domain basis vector windows respectively corresponding to M₁₂ CSI-RS resources in the Nₜₒₜ CSI-RS resources;
fifty-fifth information, indicating Mᵥ frequency domain basis vectors corresponding to each of M₁₂ CSI-RS resources based on the same start point corresponding to the M₁₂ CSI-RS resources;
fifty-sixth information, indicating start points of frequency domain basis vector windows respectively corresponding to remaining CSI-RS resources other than M₁₂ CSI-RS resources in the Nₜₒₜ CSI-RS resources;
fifty-seventh information, indicating Mᵥ frequency domain basis vectors corresponding to each of remaining CSI-RS resources based on start points of frequency domain basis vector windows respectively corresponding to the remaining CSI-RS resources other than M₁₂ CSI-RS resources;
fifty-eighth information, indicating whether start points of frequency domain basis vector windows respectively corresponding to the Nₜₒₜ CSI-RS resources are the same; or
fifty-ninth information, indicating whether Nₜₒₜ groups each including Mᵥ frequency domain basis vectors corresponding to the Nₜₒₜ CSI-RS resources are the same.

In the above embodiments, the feedback overhead of the terminal for the selected Mᵥ frequency domain basis vectors may be reduced in a case that the system performance remains unchanged.

In combination with some embodiments of the first aspect, in some embodiments, the PMIs corresponding to the Nₜₒₜ CSI-RS resources include at least one of:
sixtieth information, indicating same K₁' ports in Nₜₒₜ group each including K₁ selected ports corresponding to the Nₜₒₜ CSI-RS resources, the K₁' ports being included in each group, remaining selected ports other than the K₁' ports corresponding to each of the Nₜₒₜ CSI-RS resources, and indicating a value of K₁';
sixty-first information, indicating same K₁' ports in M₁₃ groups each including K₁ selected ports corresponding to M₁₃ CSI-RS resources in the Nₜₒₜ CSI-RS resources, the K₁' ports being included in each group, remaining selected ports other than the K₁' ports corresponding to each of the M₁₃ CSI-RS resources, and indicating a value of K₁';
sixty-second information, indicating K₁ selected ports corresponding to each of remaining CSI-RS resources other than the M₁₃ CSI-RS resources in the Nₜₒₜ CSI-RS resources;
sixty-third information, indicating same K₁ selected ports corresponding to M₁₄ CSI-RS resources in the Nₜₒₜ CSI-RS resources; or
sixty-fourth information, indicating K₁ selected ports corresponding to each of remaining CSI-RS resources other than M₁₄ CSI-RS resources in the Nₜₒₜ CSI-RS resources.

In the above embodiments, the feedback overhead of the terminal for the selected K1 ports may be reduced in a case that the system performance remains unchanged.

In a second aspect, embodiments of the disclosure provide a communication method. The method is performed by a network device, including:
sending configuration information to a terminal, in which the configuration information is used to configure Kₛ CSI-RS resources, in which Kₛ is an integer greater than 1; and
receiving first information sent from the terminal, in which the first information includes CSI-RS resource indication information, the CSI-RS resource indication information indicates Nₜₒₜ CSI-RS resources selected by the terminal, and the first information further includes PMIs corresponding to the Nₜₒₜ CSI-RS resources respectively, in which Nₜₒₜ is an integer greater than 1 and Nₜₒₜ is less than or equal to Kₛ.

In combination with some embodiments of the second aspect, in some embodiments, the PMIs corresponding to the Nₜₒₜ CSI-RS resources include at least one of:
second information, indicating the same spatial domain basis vector in a first dimension and a second dimension corresponding to the Nₜₒₜ CSI-RS resources;
third information, indicating the same spatial domain basis vector in a first dimension and a second dimension corresponding to M₁ CSI-RS resources in the Nₜₒₜ CSI-RS resources;
fourth information, indicating spatial domain basis vectors in a first dimension and a second dimension respectively corresponding to remaining CSI-RS resources other than M₁ CSI-RS resources in the Nₜₒₜ CSI-RS resources; or
fifth information, indicating CSI-RS resources with the same spatial domain basis vector in a first dimension and a second dimension in the Nₜₒₜ CSI-RS resources.

In combination with some embodiments of the second aspect, in some embodiments, the PMIs corresponding to the Nₜₒₜ CSI-RS resources include at least one of:
sixth information, indicating the same spatial domain basis vector in a first dimension corresponding to the Nₜₒₜ CSI-RS resources;
seventh information, indicating the same spatial domain basis vector in a first dimension corresponding to M₂ CSI-RS resources in the Nₜₒₜ CSI-RS resources;
eighth information, indicating spatial domain basis vectors in a first dimension respectively corresponding to remaining CSI-RS resources other than M₂ CSI-RS resources in the Nₜₒₜ CSI-RS resources; or
ninth information, indicating CSI-RS resources with the same spatial domain basis vector in a first dimension in the Nₜₒₜ CSI-RS resources.

In combination with some embodiments of the second aspect, in some embodiments, the PMIs corresponding to the Nₜₒₜ CSI-RS resources include at least one of:
tenth information, indicating the same spatial domain basis vector in a second dimension corresponding to the Nₜₒₜ CSI-RS resources;
eleventh information, indicating the same spatial domain basis vector in a second dimension corresponding to M₃ CSI-RS resources in the Nₜₒₜ CSI-RS resources;
twelfth information, indicating spatial domain basis vectors in a second dimension respectively corresponding to remaining CSI-RS resources other than M₃ CSI-RS resources in the Nₜₒₜ CSI-RS resources; or
thirteenth information, indicating CSI-RS resources with the same spatial domain basis vector in a second dimension in the Nₜₒₜ CSI-RS resources.

In combination with some embodiments of the second aspect, in some embodiments, the PMIs corresponding to the Nₜₒₜ CSI-RS resources further include:
fourteenth information, indicating whether a spatial domain basis vector in a first dimension corresponding to each of the Nₜₒₜ CSI-RS resources is the same as a spatial domain basis vector in a second dimension corresponding to the CSI-RS resource.

In combination with some embodiments of the second aspect, in some embodiments, the PMIs corresponding to the Nₜₒₜ CSI-RS resources include at least one of:
fifteenth information, indicating same spatial domain basis vector offset information corresponding to the Nₜₒₜ CSI-RS resources;
sixteenth information, indicating same spatial domain basis vector offset information corresponding to M₄ CSI-RS resources in the Nₜₒₜ CSI-RS resources;
seventeenth information, indicating spatial domain basis vector offset information respectively corresponding to remaining CSI-RS resources other than M₄ CSI-RS resources in the Nₜₒₜ CSI-RS resources; or
eighteenth information, indicating CSI-RS resources with same spatial domain basis vector offset information in the Nₜₒₜ CSI-RS resources.

In combination with some embodiments of the second aspect, in some embodiments, the PMIs corresponding to the Nₜₒₜ CSI-RS resources include at least one of:
nineteenth information, indicating same phase offset information corresponding to the Nₜₒₜ CSI-RS resources, the phase offset information including a phase offset between adjacent panels in N_{g} panels;
twentieth information, indicating same phase offset information corresponding to M₅ CSI-RS resources in the Nₜₒₜ CSI-RS resources; or
twenty-first information, indicating CSI-RS resources with same phase offset information in the Nₜₒₜ CSI-RS resources.

In combination with some embodiments of the second aspect, in some embodiments, one CSI-RS resource corresponds to one spatial domain basis vector group, and the PMIs corresponding to the Nₜₒₜ CSI-RS resources include:
twenty-second information, indicating the same spatial domain basis vector group corresponding to the Nₜₒₜ CSI-RS resources, the spatial domain basis vector group being used to select L spatial domain basis vectors;
and the PMIs corresponding to the Nₜₒₜ CSI-RS resources also include at least one of:
   twenty-third information, indicating L spatial domain basis vectors corresponding to each of the Nₜₒₜ CSI-RS resources based on the spatial domain basis vector group;
   twenty-fourth information, indicating same L spatial domain basis vectors corresponding to the Nₜₒₜ CSI-RS resources based on the spatial domain basis vector group;
   twenty-fifth information, indicating whether Nₜₒₜ groups each including L spatial domain basis vectors corresponding to the Nₜₒₜ CSI-RS resources are the same;
   twenty-sixth information, indicating same L spatial domain basis vectors corresponding to M₆ CSI-RS resources in the Nₜₒₜ CSI-RS resources based on the spatial domain basis vector group;
   twenty-seventh information, indicating L spatial domain basis vectors corresponding to each of remaining CSI-RS resources other than M₆ CSI-RS resources in the Nₜₒₜ CSI-RS resources based on the spatial domain basis vector group;
   twenty-eighth information, indicating same L' spatial domain basis vectors in Nₜₒₜ groups each including L spatial domain basis vectors corresponding to the Nₜₒₜ CSI-RS resources based on the spatial domain basis vector group, the L' spatial domain basis vectors being included in each group, and remaining L-L' spatial domain basis vectors corresponding to each of the Nₜₒₜ CSI-RS resources, and indicating a value of L';
   twenty-ninth information, indicating same L' spatial domain basis vectors in M₇ groups each including L spatial domain basis vectors corresponding to M₇ CSI-RS resources in the Nₜₒₜ CSI-RS resources based on the spatial domain basis vector group, the L' spatial domain basis vectors being included in each group, and remaining L-L' spatial domain basis vectors corresponding to each of the M₇ CSI-RS resources, and indicating a value of L';
   thirtieth information, indicating L spatial domain basis vectors corresponding to each of remaining CSI-RS resources other than M₇ CSI-RS resources in the Nₜₒₜ CSI-RS resources based on the spatial domain basis vector group; or
   thirty-first information, indicating CSI-RS resources corresponding to same L spatial domain basis vectors in the Nₜₒₜ CSI-RS resources.

In combination with some embodiments of the second aspect, in some embodiments, one CSI-RS resource corresponds to one spatial domain basis vector group, and the PMIs corresponding to the Nₜₒₜ CSI-RS resources include:
thirty-second information, indicating the same spatial domain basis vector group corresponding to M₈ CSI-RS resources in the Nₜₒₜ CSI-RS resources, the spatial domain basis vector group being used to select L spatial domain basis vectors; and
thirty-third information, indicating CSI-RS resources corresponding to the same spatial domain basis vector group in the Nₜₒₜ CSI-RS resources;
and the PMIs corresponding to the Nₜₒₜ CSI-RS resources also include at least one of:
   thirty-fourth information, indicating L spatial domain basis vectors corresponding to each of the M₈ CSI-RS resources based on the spatial domain basis vector group;
   thirty-fifth information, indicating same L spatial domain basis vectors corresponding to the M₈ CSI-RS resources based on the spatial domain basis vector group;
   thirty-sixth information, indicating whether M₈ groups each including L spatial domain basis vectors corresponding to the M₈ CSI-RS resources are the same;
   thirty-seventh information, indicating same L spatial domain basis vectors corresponding to M₉ CSI-RS resources in the M₈ CSI-RS resources based on the spatial domain basis vector group;
   thirty-eighth information, indicating L spatial domain basis vectors corresponding to each of remaining CSI-RS resources other than M₉ CSI-RS resources in the M₈ CSI-RS resources based on the spatial domain basis vector group;
   thirty-ninth information, indicating same L' spatial domain basis vectors in M₈ groups each including L spatial domain basis vectors corresponding to the M₈ CSI-RS resources based on the spatial domain basis vector group, the L' spatial domain basis vectors being included in each group, remaining L-L' spatial domain basis vectors corresponding to each of the M₈ CSI-RS resources, and indicating a value of L';
   fortieth information, indicating same L' spatial domain basis vectors in M₁₀ groups each including L spatial domain basis vectors corresponding to M₁₀ CSI-RS resources in the M₈ CSI-RS resources based on the spatial domain basis vector group, the L' spatial domain basis vectors being included in each group, remaining L-L' spatial domain basis vectors corresponding to each of the M₁₀ CSI-RS resources, and indicating a value of L';
   forty-first information, indicating L spatial domain basis vectors corresponding to each of remaining CSI-RS resources other than M₁₀ CSI-RS resources in the M₈ CSI-RS resources based on the spatial domain basis vector group;
   forty-second information, indicating CSI-RS resources corresponding to same L spatial domain basis vectors in M₈ CSI-RS resources; or
   forty-third information, indicating a spatial domain basis vector group corresponding to each of remaining CSI-RS resources other than M₈ CSI-RS resources in the Nₜₒₜ CSI-RS resources, and indicating L spatial domain basis vectors corresponding to each of the remaining CSI-RS resources based on the spatial domain basis vector group corresponding to each of the remaining CSI-RS resources.

In combination with some embodiments of the second aspect, in some embodiments, the PMIs corresponding to the Nₜₒₜ CSI-RS resources include:
forty-fourth information, indicating same L' spatial domain basis vectors in Nₜₒₜ groups each including L spatial domain basis vectors corresponding to the Nₜₒₜ CSI-RS resources, the L' spatial domain basis vectors being included in each group, remaining L-L' spatial domain basis vectors corresponding to each of the Nₜₒₜ CSI-RS resources, and indicating a value of L'.

In combination with some embodiments of the second aspect, in some embodiments, the PMIs corresponding to the Nₜₒₜ CSI-RS resources include at least one of:
forty-fifth information, indicating same Mᵥ' frequency domain basis vectors in Nₜₒₜ groups each including Mᵥ frequency domain basis vectors corresponding to the Nₜₒₜ CSI-RS resources, the Mᵥ' frequency domain basis vectors being included in each group, remaining frequency domain basis vectors other than the Mᵥ' frequency domain basis vectors corresponding to each of the Nₜₒₜ CSI-RS resources, and indicating a value of Mᵥ';
forty-sixth information, indicating same Mᵥ frequency domain basis vectors corresponding to M₁₁ CSI-RS resources in the Nₜₒₜ CSI-RS resources;
forty-seventh information, indicating Mᵥ frequency domain basis vectors corresponding to each of remaining CSI-RS resources other than the M₁₁ CSI-RS resources in the Nₜₒₜ CSI-RS resources;
forty-eighth information, indicating a start point of a frequency domain basis vector window; or
forty-ninth information, indicating Mᵥ frequency domain basis vectors corresponding to each of the Nₜₒₜ CSI-RS resources based on a start point of a frequency domain basis vector window, a length of the frequency domain basis vector window being lower than a number N₃ of subbands.

In combination with some embodiments of the second aspect, in some embodiments, one CSI-RS resource corresponds to one frequency domain basis vector window;
and the PMIs corresponding to the Nₜₒₜ CSI-RS resources include at least one of:
fiftieth information, indicating the same start point of frequency domain basis vector windows respectively corresponding to the Nₜₒₜ CSI-RS resources;
fifty-first information, indicating Mᵥ frequency domain basis vectors corresponding to each of the Nₜₒₜ CSI-RS resources based on the same start point corresponding to the Nₜₒₜ CSI-RS resources;
fifty-second information, indicating same Mᵥ' frequency domain basis vectors in Nₜₒₜ groups each including Mᵥ frequency domain basis vectors corresponding to the Nₜₒₜ CSI-RS resources based on the same start point corresponding to the Nₜₒₜ CSI-RS resources, the Mᵥ' frequency domain basis vectors being included in each group, remaining frequency domain basis vectors other than the Mᵥ' frequency domain basis vectors corresponding to each of the Nₜₒₜ CSI-RS resources, and indicating a value of Mᵥ';
fifty-third information, indicating same Mᵥ frequency domain basis vectors corresponding to the Nₜₒₜ CSI-RS resources based on the same start point corresponding to the Nₜₒₜ CSI-RS resources;
fifty-fourth information, indicating the same start point of frequency domain basis vector windows respectively corresponding to M₁₂ CSI-RS resources in the Nₜₒₜ CSI-RS resources;
fifty-fifth information, indicating Mᵥ frequency domain basis vectors corresponding to each of M₁₂ CSI-RS resources respectively based on the same start point corresponding to the M₁₂ CSI-RS resources;
fifty-sixth information, indicating start points of frequency domain basis vector windows respectively corresponding to remaining CSI-RS resources other than M₁₂ CSI-RS resources in the Nₜₒₜ CSI-RS resources;
fifty-seventh information, indicating Mᵥ frequency domain basis vectors corresponding to each of remaining CSI-RS resources based on start points of frequency domain basis vector windows respectively corresponding to the remaining CSI-RS resources other than M₁₂ CSI-RS resources;
fifty-eighth information, indicating whether start points of frequency domain basis vector windows respectively corresponding to the Nₜₒₜ CSI-RS resources are the same; or
fifty-ninth information, indicating whether Nₜₒₜ groups each including Mᵥ frequency domain basis vectors corresponding to the Nₜₒₜ CSI-RS resources are the same.

In combination with some embodiments of the second aspect, in some embodiments, the PMIs corresponding to the Nₜₒₜ CSI-RS resources include at least one of:
sixtieth information, indicating same K₁' ports in Nₜₒₜ group each including K₁ selected ports corresponding to the Nₜₒₜ CSI-RS resources, the K₁' ports being included in each group, remaining selected ports other than the K₁' ports corresponding to each of the Nₜₒₜ CSI-RS resources, and indicating a value of K₁';
sixty-first information, indicating same K₁' ports in M₁₃ groups each including K₁ selected ports corresponding to M₁₃ CSI-RS resources in the Nₜₒₜ CSI-RS resources, the K₁' ports being included in each group, remaining selected ports other than the K₁' ports corresponding to each of the M₁₃ CSI-RS resources, and indicating a value of K₁';
sixty-second information, indicating K₁ selected ports corresponding to each of remaining CSI-RS resources other than the M₁₃ CSI-RS resources in the Nₜₒₜ CSI-RS resources;
sixty-third information, indicating same K₁ selected ports corresponding to M₁₄ CSI-RS resources in the Nₜₒₜ CSI-RS resources; or
sixty-fourth information, indicating K₁ selected ports corresponding to each of remaining CSI-RS resources other than M₁₄ CSI-RS resources in the Nₜₒₜ CSI-RS resources.

In a third aspect, embodiments of the disclosure provide a communication apparatus. The communication apparatus includes:
a transceiver module, configured to receive configuration information sent from a network device, in which the configuration information is used to configure Kₛ CSI-RS resources, in which Kₛ is an integer greater than 1.

The transceiver module is also configured to send first information to the network device, in which the first information includes CSI-RS resource indication information, the CSI-RS resource indication information indicates Nₜₒₜ CSI-RS resources selected by the terminal, and the first information further includes PMIs corresponding to the Nₜₒₜ CSI-RS resources respectively, in which Nₜₒₜ is an integer greater than 1 and Nₜₒₜ is less than or equal to Kₛ.

In a fourth aspect, embodiments of the disclosure provide a communication apparatus. The communication apparatus includes:
a transceiver module, configured to send configuration information to a terminal, in which the configuration information is used to configure Kₛ CSI-RS resources, in which Kₛ is an integer greater than 1; and
the transceiver module is also configured to receive first information sent from a terminal, in which the first information includes CSI-RS resource indication information, the CSI-RS resource indication information indicates Nₜₒₜ CSI-RS resources selected by the terminal, and the first information further includes PMIs corresponding to the Nₜₒₜ CSI-RS resources respectively, in which Nₜₒₜ is an integer greater than 1 and Nₜₒₜ is less than or equal to Kₛ.

In a fifth aspect, embodiments of the disclosure provide a communication device. The communication device includes: one or more processors; in which the terminal is configured to perform the first aspect and alternative implementations of the first aspect.

In a sixth aspect, embodiments of the disclosure provide a communication device. The communication device includes: one or more processors; in which the network device is configured to perform the second aspect and alternative implementations of the second aspect.

In a seventh aspect, embodiments of the disclosure provide a communication system. The communication system includes: a terminal and a network device. The terminal is configured to perform the method described in the first aspect and alternative implementations of the first aspect, and the network device is configured to perform the method described in the second aspect and alternative implementations of the second aspect.

In an eighth aspect, embodiments of the disclosure provide a storage medium. The storage medium stores instructions. When the instructions are run on a communication device, the communication device is caused to perform the method described in the first aspect and alternative implementations of the first aspect or the method described in the second aspect and alternative implementations of the second aspect.

In a ninth aspect, embodiments of the disclosure provide a program product. When the program product is performed by a communication device, the communication device is caused to perform the method described in the first aspect and alternative implementations of the first aspect or the method described in the second aspect and alternative implementations of the second aspect.

In a tenth aspect, embodiments of the disclosure provide a computer program. When the computer program is run on a computer, the computer is caused to perform the method described in the first aspect and alternative implementations of the first aspect or the method described in the second aspect and alternative implementations of the second aspect.

In an eleventh aspect, embodiments of the disclosure provide a chip or a chip system. The chip or chip system includes a processing circuit, configured to perform the method described in the first aspect and alternative implementations of the first aspect or the method described in the second aspect and alternative implementations of the second aspect.

It may be understood that all the communication apparatus, the terminal, the network device, the communication system, the storage medium, the program product, the computer program and the chip or the chip system may be configured to perform the method according to embodiments of the disclosure. Thus, for beneficial effects they may achieve, please refer to the beneficial effects in the corresponding methods, which is not repeated herein.

Embodiments of the disclosure are not exhaustive, but are only illustrative, and are not intended to be a detailed limitation on the protection scope of the disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, alternative implementations in a certain embodiment may be arbitrarily combined. In addition, embodiments may be arbitrarily combined, for example, some or all steps of different embodiments may be arbitrarily combined, and a certain embodiment may be arbitrarily combined with alternative implementations of other embodiments.

In embodiments of the disclosure, unless otherwise specified or there is a logical conflict, the terms and/or descriptions between embodiments are consistent and reference to each other may be made, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" or "multiple" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is performed independently of B); in some embodiments, B (B is performed independently of A); in some embodiments, one is selected from A and B to be performed (A and B are selectively performed); in some embodiments, A and B (both A and B are performed). When there are more branches such as A, B, C, etc., the above is applicable.

In some embodiments, the descriptions such as "A or B", etc. may include the following technical solutions according to situations: in some embodiments, A (A is performed independently of B); in some embodiments, B (B is executed independently of A); in some embodiments, one is selected from A and B to be performed (A and B are selectively performed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, please refer to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, there may be one or more "apparatuses". In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, names of which are not limited to the names recorded in the embodiments; or in some situations, and may also be interpreted as "equipment", "device", "circuit", "network element", "node", "function", "unit", "section", "system", "network", "chip", "chip system", "entity", and "subject".

In some embodiments, the term such as "network" may be interpreted as an apparatus (such as, an access network device, a core network device, etc.) included in the network.

In some embodiments, "access network device (AN device)" may also be called as "radio access network device (RAN device)", "base station (BS)", "radio base station", "fixed station", or in some embodiments, "AN device" may also be interpreted as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" or the like.

In some embodiments, "terminal", or "terminal device", may also be called as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" or the like.

In some embodiments, the acquisition of data, information, etc. may comply with laws and regulations of the country to which the data is obtained.

In some embodiments, data, information, etc. may be obtained with consent from users.

Further, each element, row, or column in tables involved in the disclosure may be implemented as an independent embodiment; any combination of elements, rows, or columns may be implemented as an independent embodiment.

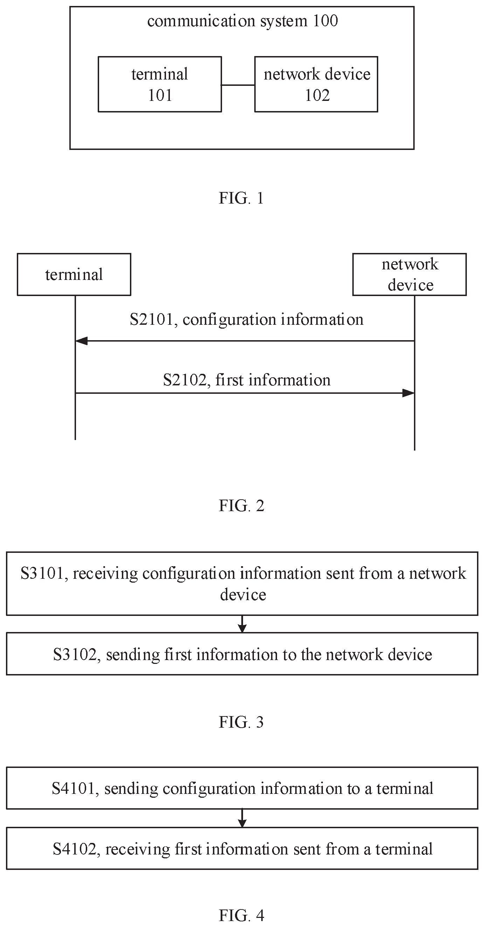

FIG. 1 is a schematic diagram illustrating an architecture of a communication system according to an embodiment of the disclosure. As illustrated in FIG. 1, the communication system 100 may include a terminal 101, and a network device 102. In some embodiments, the network device 102 may include at least one of an access network device or a core network device.

In some embodiments, the terminal 101 for example includes at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device is such as, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, interfaces between or within the access network devices involved in embodiments of the disclosure may become internal interfaces of the Open RAN, and processes and information interactions between these internal interfaces may be implemented through software or programs.

In some embodiments, the access network device may be combined by a central unit (CU) and distributed units (DUs), in which the CU may also be called a control unit. A protocol layer of the access network device may be divided by employing a CU-DU structure. Some of functions of the protocol layer are centrally controlled by the CU, and some of or all of remaining functions of the protocol layer are distributed in the DUs which are centrally controlled by the CU, but is not limited herein.

In some embodiments, the core network device may be one device, including one or more network elements, or may be multiple devices or a device group respectively including all or some of the one or more network elements. The core network device may be virtual or physical. The core network may include at least one of an evolved packet core (EPC), a 5G core network (5GCN), or a next generation core (NGC).

It may be understood that the communication system described in embodiments of the disclosure aims to more clearly illustrate the technical solutions of embodiments of the disclosure, and does not constitute a limitation on the technical solutions provided in embodiments of the disclosure. The skilled in the art may know that with the evolution of the system architecture and the emergence of new service scenarios, the technical solution provided in embodiments of the disclosure are also applicable to similar technical problems.

The following embodiments of the disclosure may be applied to the communication system 100 or some of the subjects illustrated in FIG. 1, but are not limited herein. The subjects illustrated in FIG. 1 are examples, and the communication system may include all or some of the subjects in FIG. 1, or may include other subjects than those illustrated in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the multiple systems may also be combined (such as, a combination of LTE or LTE-A and 5G, etc.) for application.

A CSI reporting setting includes configuration of the following parameters: a CSI report quantity, a codebook configuration, a time domain characteristic of CSI feedback, a frequency domain granularity of a precoding matrix indicator (PMI) and a channel quality indicator (CQI), and the like. A report quantity based on a CSI-RS resource indicator (CRI) may include CRI-RI-PMI-CQI, CRI-RI-layer indicator (LI)-PMI-CQI, CRI-RI-CQI, CRI-reference signal receiver power (RSRP), and the like. For example, the report quantity configured as the CRI-RI-PMI-CQI means that the CRI, the rank indicator (RI), the PMI and the CQI are fed back and reported together. A network side may configure Kₛ (>1) CSI-RS resources for channel measurement. In a case that Kₛ=2, each CSI-RS resource includes a maximum of 16 ports. In a case that 2<Kₛ≤8, each CSI-RS resource includes a maximum of 8 ports. A UE may report the CRI to the network side via $\left⌈{log}_{2}\left({K}_{s}\right)\right⌉ bits$ to indicate a CSI-RS resource selected by the UE, and the UE determines correspondingly indication information such as the RI, the PMI, and the CQI based on the CSI-RS resource and reports the indication information to the network side.

For a Rel-15 Type I single-panel codebook, a PMI reported by a UE includes indication information of a selected spatial domain basis vector, indication information of a spatial domain basis vector offset, and phase offset indication information of a wideband/subband. For example, the UE indicates a selected spatial domain basis vector in a horizontal dimension via $\left⌈{log}_{2} {N}_{1} {O}_{1}\right⌉$ bits or $\left⌈{log}_{2}\frac{{N}_{1} {O}_{1}}{2}\right⌉$ bits, indicates a selected spatial domain basis vector in a vertical dimension via $\left⌈{log}_{2} {N}_{2} {O}_{2}\right⌉$ bits or $\left⌈{log}_{2}\frac{{N}_{2} {O}_{2}}{2}\right⌉$ bits, and also indicates spatial domain basis vector offset information via Nₒ bits, for example, Nₒ=1 or 2, where N₁ represents a number of antenna ports in the horizontal dimension, N₂ represents a number of antenna ports in the vertical dimension, O₁ represents an oversampling factor of the antenna ports in the horizontal dimension, and O₂ represents an oversampling factor of the antenna ports in the vertical dimension.

For two-layer CSI reporting, Table 1 illustrates a mapping relationship between spatial domain basis vector offset information indicated by i_{1,3} and codebook parameters k₁ and k₂.

**Table 1**

| i_{1,3} | N₁>N₂>1 | | N₁=N₂ | | N₁=2,N₂=1 | | N₁>2,N₂=1 | |
|---|---|---|---|---|---|---|---|---|
| | k₁ | k₂ | k₁ | k₂ | k₁ | k₂ | k₁ | k₂ |
| 0 | 0 | 0 | 0 | 0 | 0 | 0 | 0 | 0 |
| 1 | O₁ | 0 | O₁ | 0 | O₁ | 0 | O₁ | 0 |
| 2 | 0 | O₂ | 0 | O₂ | | | 2O₁ | 0 |
| 3 | 2O₁ | 0 | O₁ | O₂ | | | 3O₁ | 0 |

For a Rel-15 Type I multi-panel codebook, a PMI reported by a UE includes indication information of a selected spatial domain basis vector, indication information of a spatial domain basis vector offset, phase offset indication information between panels, and a phase offset indication information of a wideband/subband. For example, the UE indicates a selected spatial domain basis vector in the horizontal dimension via $\left⌈{log}_{2} {N}_{1} {O}_{1}\right⌉$ bits, indicates a selected spatial domain basis vector in the vertical dimension via $\left⌈{log}_{2} {N}_{2} {O}_{2}\right⌉$ bits, also indicates spatial domain basis vector offset information via Nₒ bits, and indicates phase offset information between adjacent panels via Nₚ bits, for example, Nₒ=1 or 2, and Nₚ=2.

For a Rel-15 Type II and port selection codebook, a PMI reported by a UE includes L (>1) spatial domain basis vectors and combination coefficients of the L spatial domain basis vectors, and indicates the L spatial domain basis vectors selected by the UE via $\left⌈{log}_{2}\left({O}_{1}{O}_{2}\right)\right⌉ + \left⌈{log}_{2}\left(\begin{matrix}{N}_{1} {N}_{2} \\ L\end{matrix}\right)\right⌉$ bits, in which $\left(\begin{matrix}X \\ Y\end{matrix}\right)$ represents a calculation of selecting a combination of Y from X.

For a Rel-16 Type II codebook, a PMI reported by a UE includes L (>1) spatial domain basis vectors, Mᵥ frequency domain basis vectors, and combination coefficients corresponding to the spatial domain basis vectors and the frequency domain basis vectors. The UE still indicates the selected L spatial domain basis vectors via $\left⌈{log}_{2}\left({O}_{1}{O}_{2}\right)\right⌉ + \left⌈{log}_{2}\left(\begin{matrix}{N}_{1} {N}_{2} \\ L\end{matrix}\right)\right⌉$ bits. In a case that a number of subbands N3≤19, the UE indicates the selected Mᵥ frequency domain basis vectors via $\left⌈{log}_{2}\left(\begin{matrix}{N}_{3} - 1 \\ {M}_{ν} - 1\end{matrix}\right)\right⌉$ bits. In a case that a number of subbands N3>19, the UE indicates the selected Mᵥ frequency domain basis vectors via $\left⌈{log}_{2}\left(2{M}_{ν}\right)\right⌉ + \left⌈{log}_{2}\left(\begin{matrix}2 {M}_{ν} - 1 \\ {M}_{ν} - 1\end{matrix}\right)\right⌉$ bits.

For a Rel-17 port selection Type II codebook, a PMI reported by a UE includes port selection indication information, one piece of frequency domain basis vector offset indication information, and corresponding combination coefficients. The UE indicates a CSI-RS port selected by the terminal via reporting $\left⌈{log}_{2}\left(\begin{matrix}{P}_{CSI - RS} / 2 \\ {K}_{1} / 2\end{matrix}\right)\right⌉$ bits, and indicates the frequency domain basis vector offset information via $\left⌈{log}_{2}\left(N-1\right)\right⌉$ bits, where N represents a number of candidate frequency domain basis vectors, K₁ represents a number of CSI-RS ports selected by the terminal, and P_{CSI-RS} represents a total number of CSI-RS ports.

At least one of the codebook parameters L, Mᵥ, N₁, N₂, N₃, N, K₁, and P_{CSI-RS} corresponding to the above codebooks may be configured by the network side for the terminal via an RRC signaling.

In embodiments of the disclosure, the terms such as spatial domain basis vector and spatial domain basis vector beam may be used interchangeably, and the terms such as spatial domain basis vector group and spatial domain basis vector beam group may be used interchangeably.

To further improve the system efficiency or enhance the coverage, expanding an antenna scale by increasing the number of antenna ports is an important technical means for achieving this purpose. In current commercial deployment, the antenna scale may be further expanded to 4 times of an original scale. For example, there needs to support 64 or 128 CSI-RS ports to implement channel measurement of 64 or 128 antenna ports. Considering a compromise between performance and deployment cost, a hybrid beam of digital and analog may continue to be used in future standard evolution. Due to a larger number of ports, the number of accessing users in a network is also larger, and correspondingly, the network requires the terminal to feed back more of the CRI, the RI, the CQI, and the PMI for scheduling multiple users on the network side, to improve the system performance. Each RI/CQI/PMI is obtained via computation based on an independent CSI-RS resource, and the corresponding CSI-RS resource is indicated by the CRI. In a case that CRI>1, if a corresponding PMI is independently reported for each CSI-RS resource, feedback overhead may increase multiplicatively.

An existing solution only feeds back one CRI/RI/CQI/PMI. When multiple CRIs/RIs/CQIs/PMIs are fed back, if each CRI/RI/CQI/PMI is fed back independently, the feedback overhead increases multiplicatively. How to reduce the feedback overhead of the terminal in a case that the performance remains unchanged is a problem to be solved.

FIG. 2 is an interaction flow chart illustrating a communication method according to an embodiment of the disclosure. As illustrated in FIG. 2, embodiments of the disclosure relate to a communication method. The method includes the following.

At step S2101, a network device sends configuration information to a terminal.

In some embodiments, the terminal receives the configuration information sent from the network device. The configuration information is used by the network device to configure Kₛ CSI-RS resources for the terminal, in which Kₛ is an integer greater than 1, that is, the network device configures two or more CSI-RS resources for the terminal. The terminal selects Nₜₒₜ CSI-RS resources from the configured Kₛ CSI-RS resources, in which Nₜₒₜ is an integer greater than 1 and Nₜₒₜ is less than or equal to Ks.

At step S2102, the terminal sends first information to the network device.

In some embodiments, the first information includes CSI-RS resource indication information, the CSI-RS resource indication information indicates Nₜₒₜ CSI-RS resources selected by the terminal, for example, the CSI-RS resource indication information includes Nₜₒₜ CRIs, and each CRI indicates one CSI-RS resource selected by the terminal. The first information also includes PMIs corresponding to the Nₜₒₜ CSI-RS resources respectively.

In some embodiments, a name of the first information is not limited, and is, for example, "CSI" or the like.

For ease of understanding, description is made below to information included in the PMIs corresponding to the Nₜₒₜ CSI-RS resources in combination with different embodiments.

In some embodiments, the PMIs corresponding to the Nₜₒₜ CSI-RS resources include at least one of:
second information, indicating the same spatial domain basis vector in a first dimension and a second dimension corresponding to the Nₜₒₜ CSI-RS resources;
third information, indicating the same spatial domain basis vector in a first dimension and a second dimension corresponding to M₁ CSI-RS resources in the Nₜₒₜ CSI-RS resources;
fourth information, indicating spatial domain basis vectors in a first dimension and a second dimension respectively corresponding to remaining CSI-RS resources other than M₁ CSI-RS resources in the Nₜₒₜ CSI-RS resources; or
fifth information, indicating CSI-RS resources with the same spatial domain basis vector in a first dimension and a second dimension in the Nₜₒₜ CSI-RS resources.

In some embodiments, "the spatial domain basis vectors in the first dimension and the second dimension" may be one spatial domain basis vector, and the spatial domain basis vector corresponds to both the first dimension and the second dimension. The first dimension is, such as, a horizontal dimension, and the second dimension is, such as, a vertical dimension. In some embodiments, in a case that one spatial domain basis vector in the first dimension corresponding to one CSI-RS resource is the same as a spatial domain basis vector in the second dimension corresponding to the CSI-RS resource, only one spatial domain basis vector may be indicated for the CSI-RS resource, and the spatial domain basis vector corresponds to both the first dimension and the second dimension.

In some embodiments, a value of a related parameter M (such as a value of at least one of M₁ to M₁₄ in embodiments of the disclosure) may be reported and indicated by the terminal, or may be configured by the network device, or may be predefined after negotiation between the terminal and the network device.

In combination with the above embodiments, in some embodiments, in a case that spatial domain basis vectors in a first dimension and a second dimension respectively corresponding to the Nₜₒₜ CSI-RS resources are the same, the PMIs corresponding to the Nₜₒₜ CSI-RS resources may include the second information, and the second information indicates the same spatial domain basis vector in the first dimension and the second dimension corresponding to the Nₜₒₜ CSI-RS resources. Thus, the spatial domain basis vector in the first dimension and the second dimension corresponding to each of the Nₜₒₜ CSI-RS resources may not be indicated separately, reducing the feedback overhead of the terminal.

In combination with the above embodiments, in some embodiments, in a case that spatial domain basis vectors in a first dimension and a second dimension respectively corresponding to the M₁ CSI-RS resources in the Nₜₒₜ CSI-RS resources are the same. The PMIs corresponding to the Nₜₒₜ CSI-RS resources may include the third information, and the third information indicates the same spatial domain basis vector in the first dimension and the second dimension corresponding to the M₁ CSI-RS resources. Thus, the spatial domain basis vector in the first dimension and the second dimension corresponding to each of the M₁ CSI-RS resources may not be indicated separately, reducing the feedback overhead of the terminal. Alternatively, the PMIs corresponding to the Nₜₒₜ CSI-RS resources may also include the fourth information, to indicate the spatial domain basis vectors in the first dimension and the second dimension respectively corresponding to the remaining CSI-RS resources. Alternatively, the PMIs corresponding to the Nₜₒₜ CSI-RS resources may also include the fifth information, and the fifth information indicates the CSI-RS resources with the same spatial domain basis vector in the first dimension and the second dimension in the Nₜₒₜ CSI-RS resources.

In some embodiments, the fifth information may be indicated via a bitmap with a size being Nₜₒₜ bits or Kₛ bits, or indicated via $\left⌈{log}_{2}^{{C}_{{N}_{tot}}^{{M}_{1}}}\right⌉ + \left⌈{log}_{2}^{{N}_{tot}}\right⌉$ bits, or indicated via $\left⌈{log}_{2}^{{C}_{{N}_{tot}}^{{M}_{1}}}\right⌉ + \left⌈{log}_{2}^{{K}_{s}}\right⌉$ bits, where ${C}_{X}^{Y}$ represents a calculation of selecting a combination of Y from X, and $\left⌈⋅\right⌉$ represents rounding up. Alternatively, if M₁ is configured by the network device, the fifth information may be indicated via $\left⌈{log}_{2}^{{C}_{{N}_{tot}}^{{M}_{1}}}\right⌉$ bits, or indicated via $\left⌈{log}_{2}^{{C}_{{N}_{tot}}^{{M}_{1}}}\right⌉$ bits.

In some embodiments, the PMIs corresponding to the Nₜₒₜ CSI-RS resources include at least one of:
sixth information, indicating the same spatial domain basis vector in a first dimension corresponding to the Nₜₒₜ CSI-RS resources;
seventh information, indicating the same spatial domain basis vector in a first dimension corresponding to M₂ CSI-RS resources in the Nₜₒₜ CSI-RS resources;
eighth information, indicating spatial domain basis vectors in a first dimension respectively corresponding to remaining CSI-RS resources other than M₂ CSI-RS resources in the Nₜₒₜ CSI-RS resources; or
ninth information, indicating CSI-RS resources with the same spatial domain basis vector in a first dimension in the Nₜₒₜ CSI-RS resources.

In some embodiments, in a case that a spatial domain basis vector in the first dimension corresponding to one CSI-RS resource is different from a spatial domain basis vector in the second dimension corresponding to the CSI-RS resource, for the CSI-RS resource, the spatial domain basis vector in the first dimension and the spatial domain basis vector in the second dimension corresponding to the CSI-RS resource are indicated separately.

In combination with the above embodiments, in some embodiments, in a case that spatial domain basis vectors in the first dimension respectively corresponding to Nₜₒₜ CSI-RS resources are the same, the PMIs corresponding to the Nₜₒₜ CSI-RS resources may include the sixth information, and the sixth information indicates the same spatial domain basis vector in the first dimension corresponding to the Nₜₒₜ CSI-RS resources. Thus, the spatial domain basis vector in the first dimension corresponding to each CSI-RS resource in the Ntot CSI-RS resources may not be indicated separately, reducing the feedback overhead of the terminal.

In combination with the above embodiments, in some embodiments, in a case that the spatial domain basis vectors in the first dimension respectively corresponding to the M₂ CSI-RS resources in the Nₜₒₜ CSI-RS resources are the same, the PMIs corresponding to the Nₜₒₜ CSI-RS resources may include the seventh information, and the seventh information indicates the same spatial domain basis vector in the first dimension corresponding to the M₂ CSI-RS resources. Thus, the spatial domain basis vector in the first dimension corresponding to each CSI-RS resource in the M₂ CSI-RS resources may not be indicated separately, reducing the feedback overhead of the terminal. Alternatively, the PMIs corresponding to the Nₜₒₜ CSI-RS resources may also include the eighth information, to indicate the spatial domain basis vectors in the first dimension respectively corresponding to the remaining CSI-RS resources. Alternatively, the PMIs corresponding to the Nₜₒₜ CSI-RS resources may also include the ninth information, and the ninth information indicates the CSI-RS resources with the same spatial domain basis vector in the first dimension in the Nₜₒₜ CSI-RS resources.

In some embodiments, the ninth information may be indicated via a bitmap with a size being Nₜₒₜ bits or Kₛ bits, or indicated via $\left⌈{log}_{2}^{{C}_{{N}_{tot}}^{{M}_{2}}}\right⌉ + \left⌈{log}_{2}^{{N}_{tot}}\right⌉$ bits, or indicated via $\left⌈{log}_{2}^{{C}_{{N}_{tot}}^{{M}_{2}}}\right⌉ + \left⌈{log}_{2}^{{K}_{s}}\right⌉$ bits. Alternatively, in a case that M₂ is configured by the network device, the ninth information may be indicated via $\left⌈{log}_{2}^{{C}_{{N}_{tot}}^{{M}_{2}}}\right⌉$ bits, or indicated via $\left⌈{log}_{2}^{{C}_{{N}_{tot}}^{{M}_{2}}}\right⌉$ bits.

In some embodiments, the PMIs corresponding to the Nₜₒₜ CSI-RS resources include at least one of:
tenth information, indicating the same spatial domain basis vector in a second dimension corresponding to the Nₜₒₜ CSI-RS resources;
eleventh information, indicating the same spatial domain basis vector in a second dimension corresponding to M₃ CSI-RS resources in the Nₜₒₜ CSI-RS resources;
twelfth information, indicating spatial domain basis vectors in a second dimension respectively corresponding to remaining CSI-RS resources other than M₃ CSI-RS resources in the Nₜₒₜ CSI-RS resources; or
thirteenth information, indicating CSI-RS resources with the same spatial domain basis vector in a second dimension in the Nₜₒₜ CSI-RS resources.

In combination with the above embodiments, in some embodiments, in a case that the spatial domain basis vectors in the second dimension respectively corresponding to Nₜₒₜ CSI-RS resources are the same, the PMIs corresponding to the Nₜₒₜ CSI-RS resources may include the tenth information, and the tenth information indicates the same spatial domain basis vector in the second dimension corresponding to the Nₜₒₜ CSI-RS resources. Thus, the spatial domain basis vector in the second dimension corresponding to each CSI-RS resource in the Nₜₒₜ CSI-RS resources may not be indicated separately, reducing the feedback overhead of the terminal.

In combination with the above embodiments, in some embodiments, in a case that the spatial domain basis vectors in the second dimension respectively corresponding to the M₃ CSI-RS resources in the Nₜₒₜ CSI-RS resources are the same, the PMIs corresponding to the Nₜₒₜ CSI-RS resources may include the eleventh information, and the eleventh information indicates the same spatial domain basis vector in the second dimension corresponding to the M₃ CSI-RS resources. Thus, the spatial domain basis vector in the second dimension corresponding to each CSI-RS resource in the M₃ CSI-RS resources may not be indicated separately, reducing the feedback overhead of the terminal. Alternatively, the PMIs corresponding to the Nₜₒₜ CSI-RS resources may also include the twelfth information, to indicate the spatial domain basis vectors in the second dimension respectively corresponding to the remaining CSI-RS resources. Alternatively, the PMIs corresponding to the Nₜₒₜ CSI-RS resources may also include the thirteenth information, and the thirteenth information indicates CSI-RS resources with the same spatial domain basis vector in the second dimension in the Nₜₒₜ CSI-RS resources.

In some embodiments, the thirteenth information may be indicated via a bitmap with a size being Nₜₒₜ bits or Kₛ bits, or indicated via $\left⌈{log}_{2}^{{C}_{{N}_{tot}}^{{M}_{3}}}\right⌉ + \left⌈{log}_{2}^{{N}_{tot}}\right⌉$ bits, or indicated via $\left⌈{log}_{2}^{{C}_{{N}_{tot}}^{{M}_{3}}}\right⌉ + \left⌈{log}_{2}^{{K}_{s}}\right⌉$ bits. Alternatively, in a case that M₃ is configured by the network device, the thirteenth information may be indicated via $\left⌈{log}_{2}^{{C}_{{N}_{tot}}^{{M}_{3}}}\right⌉$ bits, or indicated via $\left⌈{log}_{2}^{{C}_{{N}_{tot}}^{{M}_{3}}}\right⌉$ bits.

In some embodiments, the PMIs corresponding to the Nₜₒₜ CSI-RS resources also include:
fourteenth information, indicating whether a spatial domain basis vector in a first dimension corresponding to each of the Nₜₒₜ CSI-RS resources is the same as a spatial domain basis vector in a second dimension corresponding to the CSI-RS resource.

In some embodiments, the fourteenth information may be indicated via one bit.

In some embodiments, in the Nₜₒₜ CSI-RS resources, in a case that the spatial domain basis vector in the first dimension corresponding to each CSI-RS resource is the same as the spatial domain basis vector in the second dimension corresponding to the CSI-RS resource, for each CSI-RS resource in the Nₜₒₜ CSI-RS resources, only one spatial domain basis vector may be indicated, and the spatial domain basis vector corresponds to both the first dimension and the second dimension.

In some embodiments, in the Nₜₒₜ CSI-RS resources, in a case that the spatial domain basis vector in the first dimension corresponding to each CSI-RS resource is different from the spatial domain basis vector in the second dimension corresponding to the CSI-RS resource, for each CSI-RS resource in the Nₜₒₜ CSI-RS resources, the spatial domain basis vector in the first dimension and the spatial domain basis vector in the second dimension corresponding to the CSI-RS resource are indicated separately.

In some embodiments, in the Nₜₒₜ CSI-RS resources, in a case that spatial domain basis vectors in the first dimension and spatial domain basis vectors in the second dimension corresponding to some of CSI-RS resources are the same, for the some of CSI-RS resources, only one spatial domain basis vector may be indicated, and the spatial domain basis vector corresponds to both the first dimension and the second dimension.

In some embodiments, the PMIs corresponding to the Nₜₒₜ CSI-RS resources include at least one of:
fifteenth information, indicating same spatial domain basis vector offset information corresponding to the Nₜₒₜ CSI-RS resources;
sixteenth information, indicating same spatial domain basis vector offset information corresponding to M₄ CSI-RS resources in the Nₜₒₜ CSI-RS resources;
seventeenth information, indicating spatial domain basis vector offset information respectively corresponding to remaining CSI-RS resources other than M₄ CSI-RS resources in the Nₜₒₜ CSI-RS resources; or
eighteenth information, indicating CSI-RS resources with same spatial domain basis vector offset information in the Nₜₒₜ CSI-RS resources.

In combination with the above embodiments, in some embodiments, in a case that spatial domain basis vector offset information respectively corresponding to the Nₜₒₜ CSI-RS resources are the same, the PMIs corresponding to the Nₜₒₜ CSI-RS resources may include the fifteenth information, and the fifteenth information indicates the same spatial domain basis vector offset information corresponding to the Nₜₒₜ CSI-RS resources. Thus, the spatial domain basis vector offset information corresponding to each CSI-RS resource in the Nₜₒₜ CSI-RS resources may not be indicated separately, reducing the feedback overhead of the terminal.

In combination with the above embodiments, in some embodiments, in a case that spatial domain basis vector offset information respectively corresponding to the M₄ CSI-RS resources in the Nₜₒₜ CSI-RS resources are the same, the PMIs corresponding to the Nₜₒₜ CSI-RS resources may include the sixteenth information, and the sixteenth information indicates the same spatial domain basis vector offset information corresponding to the M₄ CSI-RS resources. Thus, the spatial domain basis vector offset information corresponding to each CSI-RS resource in the M₄ CSI-RS resources may not be indicated separately, reducing the feedback overhead of the terminal. Alternatively, the PMIs corresponding to the Nₜₒₜ CSI-RS resources may also include the seventeenth information, to indicate the spatial domain basis vector offset information respectively corresponding to the remaining CSI-RS resources. Alternatively, the PMIs corresponding to the Nₜₒₜ CSI-RS resources may also include the eighteenth information, and the eighteenth information indicates the CSI-RS resources with the same spatial domain basis vector offset information in the Nₜₒₜ CSI-RS resources.

In some embodiments, the eighteenth information may be indicated via a bitmap with a size being Nₜₒₜ bits or Kₛ bits, or indicated via $\left⌈{log}_{2}^{{C}_{{N}_{tot}}^{{M}_{4}}}\right⌉ + \left⌈{log}_{2}^{{N}_{tot}}\right⌉$ bits, or indicated via $\left⌈{log}_{2}^{{C}_{{N}_{tot}}^{{M}_{4}}}\right⌉ + \left⌈{log}_{2}^{{K}_{s}}\right⌉$ bits. Alternatively, in a case that M₄ is configured by the network device, the eighteenth information may be indicated via $\left⌈{log}_{2}^{{C}_{{N}_{tot}}^{{M}_{4}}}\right⌉$ bits, or indicated via $\left⌈{log}_{2}^{{C}_{{N}_{tot}}^{{M}_{4}}}\right⌉$ bits.

In some embodiments, for a method for indicating one or more spatial domain basis vectors corresponding to Nₜₒₜ CSI-RS resources and a method for indicating one or more instances of spatial domain basis vector offset information corresponding to the Nₜₒₜ CSI-RS resources in the Rel-15 Type I single-panel codebook, please refer to the above embodiments.

In some embodiments, for a method for indicating one or more spatial domain basis vectors corresponding to Nₜₒₜ CSI-RS resources and a method for indicating one or more instances of spatial domain basis vector offset information corresponding to the Nₜₒₜ CSI-RS resources in a Rel-15 Type I multi-panel codebook, please refer to the above embodiments.

In some embodiments, the PMIs corresponding to the Nₜₒₜ CSI-RS resources include at least one of:
nineteenth information, indicating same phase offset information corresponding to the Nₜₒₜ CSI-RS resources, the phase offset information including a phase offset between adjacent panels in N_{g} panels;
twentieth information, indicating same phase offset information corresponding to M₅ CSI-RS resources in the Nₜₒₜ CSI-RS resources; or
twenty-first information, indicating CSI-RS resources with same phase offset information in the Nₜₒₜ CSI-RS resources.

In some embodiments, phase offset information corresponding to one CSI-RS resource may be indicated via (N_{g}-1)*Nₚ bits, in which N_{g} represents a number of panels, and Nₚ represents a number of bits of phase offset information between two panels as adjacent panels.

In combination with the above embodiments, in some embodiments, in a case that phase offset information respectively corresponding to Nₜₒₜ CSI-RS resources are the same, the PMIs corresponding to the Nₜₒₜ CSI-RS resources may include the nineteenth information, and the nineteenth information indicates the same phase offset information corresponding to the Nₜₒₜ CSI-RS resources. Thus, the phase offset information corresponding to each CSI-RS resource in the Nₜₒₜ CSI-RS resources may not be indicated separately, reducing the feedback overhead of the terminal.

In combination with the above embodiments, in some embodiments, in a case that the phase offset information respectively corresponding to the M₅ CSI-RS resources in the Nₜₒₜ CSI-RS resources are the same, the PMIs corresponding to the Nₜₒₜ CSI-RS resources may include the twentieth information, and the twentieth information indicates the same phase offset information corresponding to the M₅ CSI-RS resources. Thus, the phase offset information corresponding to each CSI-RS resource in the M₅ CSI-RS resources may not be indicated separately, reducing the feedback overhead of the terminal. Alternatively, the PMIs corresponding to the Nₜₒₜ CSI-RS resources may also include the twenty-first information, and the twenty-first information indicates CSI-RS resources with the same phase offset information in the Nₜₒₜ CSI-RS resources.

In some embodiments, the twenty-first information may be indicated via a bitmap with a size being Nₜₒₜ bits or Kₛ bits, or indicated via $\left⌈{log}_{2}^{{C}_{{N}_{tot}}^{{M}_{5}}}\right⌉ + \left⌈{log}_{2}^{{N}_{tot}}\right⌉$ bits, or indicated via $\left⌈{log}_{2}^{{C}_{{N}_{tot}}^{{M}_{5}}}\right⌉ + \left⌈{log}_{2}^{{K}_{s}}\right⌉$ bits. Alternatively, in a case that M₅ is configured by the network device, the twenty-first information may be indicated via $\left⌈{log}_{2}^{{C}_{{N}_{tot}}^{{M}_{5}}}\right⌉$ bits, or indicated via $\left⌈{log}_{2}^{{C}_{{N}_{tot}}^{{M}_{5}}}\right⌉$ bits.

In some embodiments, for a method for indicating phase offset information between adjacent panels corresponding to Nₜₒₜ CSI-RS resources in a Rel-15 Type I multi-panel codebook, please refer to the above embodiments.

In some embodiments, one CSI-RS resource corresponds to one spatial domain basis vector group, and the PMIs corresponding to the Nₜₒₜ CSI-RS resources include:
twenty-second information, indicating the same spatial domain basis vector group corresponding to the Nₜₒₜ CSI-RS resources, the spatial domain basis vector group being used to select L spatial domain basis vectors.

In some embodiments, one spatial domain basis vector group may be indicated via $\left⌈{log}_{2}\left({O}_{1}{O}_{2}\right)\right⌉$ bits.

In combination with the above embodiments, in some embodiments, in a case that spatial domain basis vector groups respectively corresponding to Nₜₒₜ CSI-RS resources are the same, the PMIs corresponding to the Nₜₒₜ CSI-RS resources may include the twenty-second information, and the twenty-second information indicates the same spatial domain basis vector group corresponding to the Nₜₒₜ CSI-RS resources. Thus, the spatial domain basis vector group corresponding to each CSI-RS resource in the Nₜₒₜ CSI-RS resources may not be indicated separately, reducing the feedback overhead of the terminal.

For one CSI-RS resource, there also needs to indicate the terminal to select L spatial domain basis vectors from N₁N₂ spatial domain basis vectors in the corresponding spatial domain basis vector group. Thus, for the Nₜₒₜ CSI-RS resources, there needs to indicate the selected L spatial domain basis vectors corresponding to each CSI-RS resource in the Nₜₒₜ CSI-RS resources.

In some embodiments, the PMIs corresponding to the Nₜₒₜ CSI-RS resources further include at least one of:
twenty-third information, indicating L spatial domain basis vectors corresponding to each of the Nₜₒₜ CSI-RS resources based on the spatial domain basis vector group;
twenty-fourth information, indicating same L spatial domain basis vectors corresponding to the Nₜₒₜ CSI-RS resources based on the spatial domain basis vector group;
twenty-fifth information, indicating whether Nₜₒₜ groups each including L spatial domain basis vectors corresponding to the Nₜₒₜ CSI-RS resources are the same;
twenty-sixth information, indicating same L spatial domain basis vectors corresponding to M₆ CSI-RS resources in the Nₜₒₜ CSI-RS resources based on the spatial domain basis vector group;
twenty-seventh information, indicating L spatial domain basis vectors corresponding to each of remaining CSI-RS resources other than M₆ CSI-RS resources in the Nₜₒₜ CSI-RS resources based on the spatial domain basis vector group;
twenty-eighth information, indicating same L' spatial domain basis vectors in Nₜₒₜ groups each including L spatial domain basis vectors corresponding to the Nₜₒₜ CSI-RS resources based on the spatial domain basis vector group, the L' spatial domain basis vectors being included in each group, and remaining L-L' spatial domain basis vectors corresponding to each of the Nₜₒₜ CSI-RS resources, and indicating a value of L';
twenty-ninth information, indicating same L' spatial domain basis vectors in M₇ groups each including L spatial domain basis vectors corresponding to M₇ CSI-RS resources in the Nₜₒₜ CSI-RS resources based on the spatial domain basis vector group, the L' spatial domain basis vectors being included in each group, and remaining L-L' spatial domain basis vectors corresponding to each of the M₇ CSI-RS resources, and indicating a value of L';
thirtieth information, indicating L spatial domain basis vectors corresponding to each of remaining CSI-RS resources other than M₇ CSI-RS resources in the Nₜₒₜ CSI-RS resources based on the spatial domain basis vector group; or
thirty-first information, indicating CSI-RS resources corresponding to same L spatial domain basis vectors in the Nₜₒₜ CSI-RS resources.

In combination with the above embodiments, in some embodiments, the PMIs corresponding to the Nₜₒₜ CSI-RS resources may include the twenty-third information, to indicate the L spatial domain basis vectors corresponding to each of the Nₜₒₜ CSI-RS resources.

In some embodiments, the L spatial domain basis vectors corresponding to one CSI-RS resource may be indicated via $\left⌈{log}_{2}\left(\begin{matrix}{N}_{1} {N}_{2} \\ L\end{matrix}\right)\right⌉$ bits.

In combination with the above embodiments, in some embodiments, in a case that Nₜₒₜ groups each including L spatial domain basis vectors corresponding to Nₜₒₜ CSI-RS resources are the same, the PMIs corresponding to the Nₜₒₜ CSI-RS resources may include the twenty-fourth information, and the twenty-fourth information indicates the same L spatial domain basis vectors corresponding to the Nₜₒₜ CSI-RS resources. Thus, the L spatial domain basis vectors corresponding to each CSI-RS resource in the Nₜₒₜ CSI-RS resources may not be indicated separately, reducing the feedback overhead of the terminal. It should be noted that "Nₜₒₜ groups each including L spatial domain basis vectors corresponding to the Nₜₒₜ CSI-RS resources are the same" may be described that: L spatial domain basis vectors corresponding to any CSI-RS resource in the Nₜₒₜ CSI-RS resources are the same as L spatial domain basis vectors corresponding to another CSI-RS resource in the Nₜₒₜ CSI-RS resources. Alternatively, the PMIs corresponding to the Nₜₒₜ CSI-RS resources may also include the twenty-fifth information, and the twenty-fifth information indicates whether Nₜₒₜ groups each including the L spatial domain basis vectors corresponding to the Nₜₒₜ CSI-RS resources are the same.

In some embodiments, the same L spatial domain basis vectors may be indicated via $\left⌈{log}_{2}\left(\begin{matrix}{N}_{1} {N}_{2} \\ L\end{matrix}\right)\right⌉$ bits.

In some embodiments, whether the Nₜₒₜ groups of L spatial domain basis vectors corresponding to the Nₜₒₜ CSI-RS resources are the same may be indicated via one bit.

In combination with the above embodiments, in some embodiments, in a case that the M₆ groups each including the L spatial domain basis vectors corresponding to the M₆ CSI-RS resources in the Nₜₒₜ CSI-RS resources are the same, the PMIs corresponding to the Nₜₒₜ CSI-RS resources may include the twenty-sixth information, and the twenty-sixth information indicates the same L spatial domain basis vectors corresponding to the M₆ CSI-RS resources, thus reducing the feedback overhead of the terminal. It should be noted that "the M₆ groups each including the L spatial domain basis vectors corresponding to the M₆ CSI-RS resources are the same" may be described that: L spatial domain basis vectors corresponding to any CSI-RS resource in the M₆ CSI-RS resources are the same as L spatial domain basis vectors corresponding to another CSI-RS resources in the M₆ CSI-RS resources. Alternatively, the PMIs corresponding to the Nₜₒₜ CSI-RS resources may also include the twenty-seventh information, to indicate the L spatial domain basis vectors corresponding to each of the remaining CSI-RS resources. Alternatively, the PMIs corresponding to the Nₜₒₜ CSI-RS resources may also include the thirty-first information, and the thirty-first information indicates the CSI-RS resources corresponding to the same L spatial domain basis vectors in the Nₜₒₜ CSI-RS resources.

In combination with the above embodiments, in some embodiments, in a case that the Nₜₒₜ groups each including L spatial domain basis vectors corresponding to the Nₜₒₜ CSI-RS resources include the same L' spatial domain basis vectors respectively, the PMIs corresponding to the Nₜₒₜ CSI-RS resources may include the twenty-eighth information, and the twenty-eighth information indicates the same L' spatial domain basis vectors corresponding to the Nₜₒₜ CSI-RS resources, indicates the value of L', and indicates the remaining L-L' spatial domain basis vectors corresponding to each of the Nₜₒₜ CSI-RS resources, thus reducing the feedback overhead of the terminal. It should be noted that "Nₜₒₜ groups each including L spatial domain basis vectors corresponding to the Nₜₒₜ CSI-RS resources include the same L' spatial domain basis vectors respectively" may be described that: the L' spatial domain basis vectors in the L spatial domain basis vectors corresponding to any CSI-RS resource in the Nₜₒₜ CSI-RS resources are the same as the L' spatial domain basis vectors in the L spatial domain basis vectors corresponding to another CSI-RS resource in the Nₜₒₜ CSI-RS resources.

In some embodiments, the same L' spatial domain basis vectors may be indicated via $\left⌈{log}_{2}\left(\begin{matrix}{N}_{1} {N}_{2} \\ L ′\end{matrix}\right)\right⌉$ bits.

In some embodiments, the value of L' may be indicated via $\left⌈{log}_{2}\left(L\right)\right⌉$ bits.

In some embodiments, the remaining L-L' spatial domain basis vectors corresponding to one CSI-RS resource may be indicated via $\left⌈{log}_{2}\left(\begin{matrix}{N}_{1} {N}_{2} \\ L - L ′\end{matrix}\right)\right⌉$ bits.

In combination with the above embodiments, in some embodiments, in a case that the L' spatial domain basis vectors in the M₇ groups each including the L spatial domain basis vectors corresponding to the M₇ CSI-RS resources in the Nₜₒₜ CSI-RS resources are the same, the PMIs corresponding to the Nₜₒₜ CSI-RS resources may include the twenty-ninth information, and the twenty-ninth information indicates the same L' spatial domain basis vectors corresponding to the M₇ CSI-RS resources, indicates the value of L', and indicates the remaining L-L' spatial domain basis vectors corresponding to each of the M₇ CSI-RS resources respectively, thus reducing feedback overhead of the terminal. It should be noted that "the L' spatial domain basis vectors in the M₇ groups each including the L spatial domain basis vectors corresponding to the M₇ CSI-RS resources are the same" may be described that: the L' spatial domain basis vectors in the L spatial domain basis vectors corresponding to any one CSI-RS resource in the M₇ CSI-RS resources are the same as the L' spatial domain basis vectors in the L spatial domain basis vectors corresponding to another CSI-RS resource in the M₇ CSI-RS resources. Alternatively, the PMIs corresponding to the Nₜₒₜ CSI-RS resources may also include the thirtieth information, to indicate the L spatial domain basis vectors corresponding to each of remaining CSI-RS resources other than M₇ CSI-RS resources in the Nₜₒₜ CSI-RS resources.

In some embodiments, one CSI-RS resource corresponds to one spatial domain basis vector group, and the PMIs corresponding to the Nₜₒₜ CSI-RS resources include:
thirty-second information, indicating the same spatial domain basis vector group corresponding to M₈ CSI-RS resources in the Nₜₒₜ CSI-RS resources; and
thirty-third information, indicating CSI-RS resources corresponding to the same spatial domain basis vector group in the Nₜₒₜ CSI-RS resources.

In combination with the above embodiments, in some embodiments, in a case that spatial domain basis vector groups respectively corresponding to the M₈ CSI-RS resources in the Nₜₒₜ CSI-RS resources are the same, the PMIs corresponding to the Nₜₒₜ CSI-RS resources may include the thirty-second information and the thirty-third information. The thirty-second information indicates the same spatial domain basis vector group corresponding to the M₈ CSI-RS resources. The thirty-third information indicates the CSI-RS resources in the Nₜₒₜ CSI-RS resources corresponding to the same spatial domain basis vector group. Thus, the spatial domain basis vector group corresponding to each of the M₈ CSI-RS resources may not be indicated separately, reducing the feedback overhead of the terminal.

For the M8 CSI-RS resources, there also needs to indicate the selected L spatial domain basis vectors corresponding to each of the M₈ CSI-RS resources.

In some embodiments, the PMIs corresponding to the Nₜₒₜ CSI-RS resources further include at least one of:
thirty-fourth information, indicating L spatial domain basis vectors corresponding to each of the M₈ CSI-RS resources based on the spatial domain basis vector group;
thirty-fifth information, indicating same L spatial domain basis vectors corresponding to the M₈ CSI-RS resources based on the spatial domain basis vector group;
thirty-sixth information, indicating whether M₈ groups each including L spatial domain basis vectors corresponding to the M₈ CSI-RS resources are the same;
thirty-seventh information, indicating same L spatial domain basis vectors corresponding to M₉ CSI-RS resources in the M₈ CSI-RS resources based on the spatial domain basis vector group;
thirty-eighth information, indicating L spatial domain basis vectors corresponding to each of remaining CSI-RS resources other than M₉ CSI-RS resources in the M₈ CSI-RS resources based on the spatial domain basis vector group;
thirty-ninth information, indicating same L' spatial domain basis vectors in M₈ groups each including L spatial domain basis vectors corresponding to the M₈ CSI-RS resources based on the spatial domain basis vector group, the L' spatial domain basis vectors being included in each group, remaining L-L' spatial domain basis vectors corresponding to each of the M₈ CSI-RS resources, and indicating a value of L';
fortieth information, indicating same L' spatial domain basis vectors in M₁₀ groups each including L spatial domain basis vectors corresponding to M₁₀ CSI-RS resources in the M₈ CSI-RS resources based on the spatial domain basis vector group, the L' spatial domain basis vectors being included in each group, remaining L-L' spatial domain basis vectors corresponding to each of the M₁₀ CSI-RS resources, and indicating a value of L';
forty-first information, indicating L spatial domain basis vectors corresponding to each of remaining CSI-RS resources other than M₁₀ CSI-RS resources in the M₈ CSI-RS resources based on the spatial domain basis vector group;
forty-second information, indicating CSI-RS resources corresponding to same L spatial domain basis vectors in M₈ CSI-RS resources; or
forty-third information, indicating a spatial domain basis vector group corresponding to each of remaining CSI-RS resources other than M₈ CSI-RS resources in the Nₜₒₜ CSI-RS resources, and indicating L spatial domain basis vectors corresponding to each of the remaining CSI-RS resources based on the spatial domain basis vector group corresponding to each of the remaining CSI-RS resources.

It should be noted that, for a method for indicating the selected M₈ groups each including L spatial domain basis vectors corresponding to the M₈ CSI-RS resources, please refer to the description about the thirty-fourth information to the forty-second information, and for alternative implementation manners thereof, please refer the method for indicating the selected Nₜₒₜ groups each including L spatial domain basis vectors corresponding to the Nₜₒₜ CSI-RS resources in the above embodiments, which is not repeated herein.

In combination with the above embodiments, in some embodiments, the PMIs corresponding to the Nₜₒₜ CSI-RS resources include the forty-third information, to indicate the L spatial domain basis vectors corresponding to each of the remaining CSI-RS resources.

In some embodiments, the PMIs corresponding to the Nₜₒₜ CSI-RS resources include:
forty-fourth information, indicating same L' spatial domain basis vectors in Nₜₒₜ groups each including L spatial domain basis vectors corresponding to the Nₜₒₜ CSI-RS resources, the L' spatial domain basis vectors being included in each group, and remaining L-L' spatial domain basis vectors corresponding to each of the Nₜₒₜ CSI-RS resources, and indicating a value of L'.

In combination with the above embodiments, in some embodiments, the terminal selects the L spatial domain basis vectors from O₁O₂N₁N₂ candidate spatial domain basis vectors. In a case that the L' spatial domain basis vectors in the Nₜₒₜ groups each including the L spatial domain basis vectors corresponding to the Nₜₒₜ CSI-RS resources are the same, the PMIs corresponding to the Nₜₒₜ CSI-RS resources may include the forty-fourth information, and the forty-fourth information indicates the same L' spatial domain basis vectors corresponding to the Nₜₒₜ CSI-RS resources, indicates the value of L', and indicates the remaining L-L' spatial domain basis vectors corresponding to each of the Nₜₒₜ CSI-RS resources.

In some embodiments, the same L' spatial domain basis vectors may be indicated via $\left⌈{log}_{2}\left(\begin{matrix}{O}_{1} {O}_{2} {N}_{1} {N}_{2} \\ L ′\end{matrix}\right)\right⌉$ bits.

In some embodiments, the remaining L-L' spatial domain basis vectors corresponding to one CSI-RS resource may be indicated via $\left⌈{log}_{2}\left(\begin{matrix}{O}_{1} {O}_{2} {N}_{1} {N}_{2} \\ L - L ′\end{matrix}\right)\right⌉$ bits.

In some embodiments, for a method for indicating the selected Nₜₒₜ groups each including the L spatial domain basis vectors corresponding to the Nₜₒₜ CSI-RS resources in the Rel-15 Type II codebook, please refer to the above embodiments.

In some embodiments, for a method for indicating the selected Nₜₒₜ groups each including the L spatial domain basis vectors corresponding to the Nₜₒₜ CSI-RS resources in the Rel-16 Type II codebook, please refer to the above embodiments.

In some embodiments, the PMIs corresponding to the Nₜₒₜ CSI-RS resources include at least one of:
forty-fifth information, indicating same Mᵥ' frequency domain basis vectors in Nₜₒₜ groups each including Mᵥ frequency domain basis vectors corresponding to the Nₜₒₜ CSI-RS resources, the Mᵥ' frequency domain basis vectors being included in each group, remaining frequency domain basis vectors other than the Mᵥ' frequency domain basis vectors corresponding to each of the Nₜₒₜ CSI-RS resources, and indicating a value of Mᵥ';
forty-sixth information, indicating same Mᵥ frequency domain basis vectors corresponding to M₁₁ CSI-RS resources in the Nₜₒₜ CSI-RS resources;
forty-seventh information, indicating Mᵥ frequency domain basis vectors corresponding to each of remaining CSI-RS resources other than the M₁₁ CSI-RS resources in the Nₜₒₜ CSI-RS resources;
forty-eighth information, indicating a start point of a frequency domain basis vector window; or
forty-ninth information, indicating Mᵥ frequency domain basis vectors corresponding to each of the Nₜₒₜ CSI-RS resources based on a start point of the frequency domain basis vector window, in which a length of the frequency domain basis vector window is lower than a number N₃ of subbands.

In combination with the above embodiments, in some embodiments, in a case that the Mᵥ' frequency domain basis vectors in the Nₜₒₜ groups each including Mᵥ frequency domain basis vectors corresponding to the Nₜₒₜ CSI-RS resources are the same, the PMIs corresponding to the Nₜₒₜ CSI-RS resources may include the forty-fifth information, and the forty-fifth information indicates the same Mᵥ' frequency domain basis vectors corresponding to the Nₜₒₜ CSI-RS resources, indicates the value of Mᵥ', and indicates the remaining frequency domain basis vectors corresponding to each of the Nₜₒₜ CSI-RS resources, thus reducing the feedback overhead of the terminal. Since one frequency domain basis vector is always selected, the remaining Mᵥ-Mᵥ'-1 frequency domain basis vectors may be indicated only. It should be noted that "the Mᵥ' frequency domain basis vectors in the Nₜₒₜ groups each including the Mᵥ frequency domain basis vectors corresponding to the Nₜₒₜ CSI-RS resources are the same" may be described that: the Mᵥ' frequency domain basis vectors in Mᵥ frequency domain basis vectors corresponding to any one CSI-RS resource in the Nₜₒₜ CSI-RS resources are the same as Mᵥ' frequency domain basis vectors in the Mᵥ frequency domain basis vectors corresponding to another CSI-RS resource in the Nₜₒₜ CSI-RS resources.

In some embodiments, the same Mᵥ' frequency domain basis vectors may be indicated via $\left⌈{log}_{2}\left(\begin{matrix}{N}_{3} - 1 \\ {M}_{ν}^{′}\end{matrix}\right)\right⌉$ bits.

In some embodiments, the value of Mᵥ' may be indicated via $\left⌈{log}_{2}\left({M}_{ν}\right)\right⌉$ bits.

In some embodiments, the remaining Mᵥ-Mᵥ'-1 frequency domain basis vectors corresponding to one CSI-RS resource may be indicated via $\left⌈{log}_{2}\left(\begin{matrix}{N}_{3} - 1 \\ {M}_{ν} - {M}_{ν}^{′} - 1\end{matrix}\right)\right⌉$ bits.

In combination with the above embodiments, in some embodiments, in a case that the M₁₁ groups each including the Mᵥ frequency domain basis vectors corresponding to the M₁₁ CSI-RS resources in the Nₜₒₜ CSI-RS resources are the same, the PMIs corresponding to the Nₜₒₜ CSI-RS resources may include the forty-sixth information, and the forty-sixth information indicates the same Mᵥ frequency domain basis vectors corresponding to the M₁₁ CSI-RS resources, thus reducing the feedback overhead of the terminal. Since one frequency domain basis vector is always selected, Mᵥ-1 frequency domain basis vectors may be indicated only. It should be noted that "the same Mᵥ frequency domain basis vectors corresponding to the M₁₁ CSI-RS resources" may be described that: Mᵥ frequency domain basis vectors corresponding to any one CSI-RS resource in the M₁₁ CSI-RS resources are the same as Mᵥ frequency domain basis vectors corresponding to another CSI-RS resource in the M₁₁ CSI-RS resources. Alternatively, the PMIs corresponding to the Nₜₒₜ CSI-RS resources may also include the forty-seventh information, and the forty-seventh information indicates Mᵥ frequency domain basis vectors corresponding to each of the remaining Nₜₒₜ-M₁₁ CSI-RS resources.

In some embodiments, the Mᵥ frequency domain basis vectors corresponding to one CSI-RS resource may be indicated via $\left⌈{log}_{2}\left(\begin{matrix}{N}_{3} - 1 \\ {M}_{ν} - 1\end{matrix}\right)\right⌉$ bits.

In combination with the above embodiments, in some embodiments, a frequency domain basis vector window with a length (size) of W may be predefined or indicated, in which W<N₃. The length of the frequency domain basis vector window may be reported and indicated by the terminal, or may be configured by the network device, or may be predefined after negotiation between the terminal and the network device. The PMIs corresponding to the Nₜₒₜ CSI-RS resources may include the forty-eighth information, and the forty-eighth information indicates a start point of the frequency domain basis vector window.

In some embodiments, the start point of the frequency domain basis vector window may be indicated via $\left⌈{log}_{2}\left(W\right)\right⌉$ bits. In some embodiments, the start point of the frequency domain basis vector window may be determined based on a predefinition.

In combination with the above embodiments, in some embodiments, the PMIs corresponding to the Nₜₒₜ CSI-RS resources may include the forty-ninth information, and the forty-ninth information indicates the Mᵥ frequency domain basis vectors corresponding to each of the Nₜₒₜ CSI-RS resources based on the start point of the frequency domain basis vector window, thus completing the indication of the Mᵥ frequency domain basis vectors corresponding to each of the Nₜₒₜ CSI-RS resources based on one start point, reducing the feedback overhead of the terminal.

In some embodiments, Mᵥ frequency domain basis vectors corresponding to one CSI-RS resource are indicated via $\left⌈{log}_{2}\left(\begin{matrix}W - 1 \\ {M}_{ν} - 1\end{matrix}\right)\right⌉$ bits.

In some embodiments, for the Rel-16 Type II codebook, for a method for indicating frequency domain basis vectors corresponding to Nₜₒₜ CSI-RS resources employed when N₃≤19 reference may be made to the above embodiments.

In some embodiments, one CSI-RS resource corresponds to one frequency domain basis vector window; and the PMIs corresponding to the Nₜₒₜ CSI-RS resources include at least one of:
fiftieth information, indicating the same start point of frequency domain basis vector windows corresponding to the Nₜₒₜ CSI-RS resources;
fifty-first information, indicating Mᵥ frequency domain basis vectors corresponding to each of the Nₜₒₜ CSI-RS resources based on the same start point corresponding to the Nₜₒₜ CSI-RS resources;
fifty-second information, indicating same Mᵥ' frequency domain basis vectors in Nₜₒₜ groups each including Mᵥ frequency domain basis vectors corresponding to the Nₜₒₜ CSI-RS resources based on the same start point corresponding to the Nₜₒₜ CSI-RS resources, the Mᵥ' frequency domain basis vectors being included in each group, remaining frequency domain basis vectors other than the Mᵥ' frequency domain basis vectors corresponding to each of the Nₜₒₜ CSI-RS resources respectively, and indicating a value of Mᵥ';
fifty-third information, indicating same Mᵥ frequency domain basis vectors corresponding to the Nₜₒₜ CSI-RS resources based on the same start point corresponding to the Nₜₒₜ CSI-RS resources;
fifty-fourth information, indicating the same start point of frequency domain basis vector windows respectively corresponding to M₁₂ CSI-RS resources in the Nₜₒₜ CSI-RS resources;
fifty-fifth information, indicating Mᵥ frequency domain basis vectors corresponding to each of M₁₂ CSI-RS resources based on the same start point corresponding to the M₁₂ CSI-RS resources;
fifty-sixth information, indicating start points of frequency domain basis vector windows corresponding to each of remaining CSI-RS resources other than M₁₂ CSI-RS resources in the Nₜₒₜ CSI-RS resources;
fifty-seventh information, indicating Mᵥ frequency domain basis vectors corresponding to each of remaining CSI-RS resources based on start points of frequency domain basis vector windows respectively corresponding to the remaining CSI-RS resources other than M₁₂ CSI-RS resources;
fifty-eighth information, indicating whether start points of frequency domain basis vector windows respectively corresponding to the Nₜₒₜ CSI-RS resources are the same; or
fifty-ninth information, indicating whether Nₜₒₜ groups each including Mᵥ frequency domain basis vectors corresponding to the Nₜₒₜ CSI-RS resources are the same.

In some embodiments, each CSI-RS resource corresponds to one frequency domain basis vector window. A length of the frequency domain basis vector window may be reported and indicated by the terminal, or may be configured by the network device, or may be predefined after negotiation between the terminal and the network device. For ease of description, the length of each frequency domain basis vector window is denoted by W. In some embodiments, W may be linearly related to a number Mᵥ of selected frequency domain basis vectors, for example, W=k*Mᵥ, where a coefficient k may be reported and indicated by the terminal, or may be configured by the network device, or may be predefined after negotiation between the terminal and the network device. Alternatively, W=2Mᵥ.

In combination with the above embodiments, in some embodiments, in a case that the start points of the frequency domain basis vector windows corresponding to the Nₜₒₜ CSI-RS resources are the same, the PMIs corresponding to the Nₜₒₜ CSI-RS resources may include the fiftieth information, and the fiftieth information indicates one same start point corresponding to the Nₜₒₜ CSI-RS resources, thus reducing the feedback overhead of the terminal.

In some embodiments, one same start point may be indicated via $\left⌈{log}_{2}\left(W\right)\right⌉$ bits. In some embodiments, one same start point may be determined based on a predefinition.

In combination with the above embodiments, in some embodiments, in a case that the start points of the frequency domain basis vector windows corresponding to the Nₜₒₜ CSI-RS resources are the same, the PMIs corresponding to the Nₜₒₜ CSI-RS resources may include the fifty-first information, and the fifty-first information indicates the Mᵥ frequency domain basis vectors corresponding to each of the Nₜₒₜ CSI-RS resources based on one same start point corresponding to the Nₜₒₜ CSI-RS resources.

In combination with the above embodiments, in some embodiments, in a case that the start points of the frequency domain basis vector windows respectively corresponding to the Nₜₒₜ CSI-RS resources are the same, and Mᵥ' frequency domain basis vectors in the Nₜₒₜ groups each including the Mᵥ frequency domain basis vectors corresponding to the Nₜₒₜ CSI-RS resources are the same, the PMIs corresponding to the Nₜₒₜ CSI-RS resources may include the fifty-second information, and the fifty-second information indicates the same Mᵥ' frequency domain basis vectors corresponding to the Nₜₒₜ CSI-RS resources based on one same start point corresponding to the Nₜₒₜ CSI-RS resources, and remaining frequency domain basis vectors other than the Mᵥ' frequency domain basis vectors corresponding to each of the Nₜₒₜ CSI-RS resources, and indicates a value of Mᵥ', thus the reducing feedback overhead of the terminal. Since one frequency domain basis vector is always selected, the remaining Mᵥ-Mᵥ'-1 frequency domain basis vectors may be indicated only.

In some embodiments, the same Mᵥ' frequency domain basis vectors may be indicated via $\left⌈{log}_{2}\left(\begin{matrix}W - 1 \\ {M}_{ν}^{′}\end{matrix}\right)\right⌉$ bits.

In some embodiments, the value of Mᵥ' may be indicated via $\left⌈{log}_{2}\left(W\right)\right⌉$ bits.

In some embodiments, the remaining Mᵥ-Mᵥ'-1 frequency domain basis vectors corresponding to one CSI-RS resource may be indicated via $\left⌈{log}_{2}\left(\begin{matrix}W - 1 \\ {M}_{ν} - {M}_{ν}^{′} - 1\end{matrix}\right)\right⌉$ bits.

In combination with the above embodiments, in some embodiments, in a case that the start points of the frequency domain basis vector windows respectively corresponding to the Nₜₒₜ CSI-RS resources are the same, and the Nₜₒₜ groups each including Mᵥ frequency domain basis vectors corresponding to the Nₜₒₜ CSI-RS resources are the same, the PMIs corresponding to the Nₜₒₜ CSI-RS resources may include the fifty-third information, and the fifty-third information indicates same Mᵥ frequency domain basis vectors corresponding to the Nₜₒₜ CSI-RS resources based on one same start point corresponding to the Nₜₒₜ CSI-RS resources, thus reducing the feedback overhead of the terminal. It should be noted that "the same Mᵥ frequency domain basis vectors corresponding to the Nₜₒₜ CSI-RS resources" may be described that: Mᵥ frequency domain basis vectors corresponding to any one CSI-RS resource in the Nₜₒₜ CSI-RS resources are the same as Mᵥ frequency domain basis vectors corresponding to another CSI-RS resource in the Nₜₒₜ CSI-RS resources.

In combination with the above embodiments, in some embodiments, in a case that the start points of the frequency domain basis vector windows respectively corresponding to the M₁₂ CSI-RS resources in the Nₜₒₜ CSI-RS resources are the same, the PMIs corresponding to the Nₜₒₜ CSI-RS resources may include the fifty-fourth information, and the fifty-fourth information indicates one same start point corresponding to the M₁₂ CSI-RS resources.

In some embodiments, in a case that the start points of the frequency domain basis vector windows respectively corresponding to the M₁₂ CSI-RS resources are the same, for a method for indicating the Mᵥ frequency domain basis vectors corresponding to each of the M₁₂ CSI-RS resources, please refer to the method for indicating the Mᵥ frequency domain basis vectors corresponding to each of the Nₜₒₜ CSI-RS resources, which is not repeated herein.

In some embodiments, for the remaining Nₜₒₜ-M₁₂ CSI-RS resources, the PMIs corresponding to the Nₜₒₜ CSI-RS resources may include the fifty-sixth information and the fifty-seventh information. The fifty-sixth information indicates the start points of the frequency domain basis vector windows respectively corresponding to the remaining CSI-RS resources. The fifty-seventh information indicates Mᵥ frequency domain basis vectors corresponding to each of the remaining CSI-RS resources based on start points of the frequency domain basis vector windows respectively corresponding to the remaining CSI-RS resources. In some embodiments, the fifty-sixth information is alternative information, for example, the start point of the frequency domain basis vector window corresponding to each of the remaining CSI-RS resources is determined based on a predefinition.

In combination with the above embodiments, in some embodiments, the PMIs corresponding to the Nₜₒₜ CSI-RS resources may include the fifty-eighth information, and the fifty-eighth information indicates whether start points of frequency domain basis vector windows respectively corresponding to the Nₜₒₜ CSI-RS resources are the same, and if not the same, the start point of the frequency domain basis vector window corresponding to each of the Nₜₒₜ CSI-RS resources is indicated separately.

In combination with the above embodiments, in some embodiments, the PMIs corresponding to the Nₜₒₜ CSI-RS resources may include the fifty-ninth information, and the fifty-ninth information indicates whether the Nₜₒₜ groups each including Mᵥ frequency domain basis vectors corresponding to the Nₜₒₜ CSI-RS resources are the same, and if not the same, for indicating the Mv frequency domain basis vectors corresponding to each of the Nₜₒₜ CSI-RS resources, please refer to the fiftieth information to the fifty-second information and the fifty-fourth information to the fifty-seventh information.

In some embodiments, for the Rel-16 Type II codebook, for a method for indicating frequency domain basis vectors corresponding to Nₜₒₜ CSI-RS resources when N3>19, reference may be made to the above embodiments.

In some embodiments, the PMIs corresponding to the Nₜₒₜ CSI-RS resources include at least one of:
sixtieth information, indicating same K₁' ports in Nₜₒₜ groups each including K₁ selected ports corresponding to the Nₜₒₜ CSI-RS resources, the K₁' ports being included in each group, the K₁' ports being included in each group, remaining selected ports other than the K₁' ports corresponding to each of the Nₜₒₜ CSI-RS resources, and indicating a value of K₁';
sixty-first information, indicating same K₁' ports in M₁₃ groups each including K₁ selected ports corresponding to M₁₃ CSI-RS resources in the Nₜₒₜ CSI-RS resources, the K₁' ports being included in each group, remaining selected ports other than the K₁' ports corresponding to each of the M₁₃ CSI-RS resources, and indicating a value of K₁';
sixty-second information, indicating K₁ selected ports corresponding to each of remaining CSI-RS resources other than the M₁₃ CSI-RS resources in the Nₜₒₜ CSI-RS resources;
sixty-third information, indicating same K₁ selected ports corresponding to M₁₄ CSI-RS resources in the Nₜₒₜ CSI-RS resources; or
sixty-fourth information, indicating K₁ selected ports corresponding to each of each of remaining CSI-RS resources other than M₁₄ CSI-RS resources in the Nₜₒₜ CSI-RS resources.

In some embodiments, the K₁' ports are ports corresponding to one polarization direction.

In combination with the above embodiments, in some embodiments, in a case that the K₁' ports in the Nₜₒₜ groups each including the K₁ selected ports corresponding to the Nₜₒₜ CSI-RS resources are the same, the PMIs corresponding to the Nₜₒₜ CSI-RS resources may include the sixtieth information, and the sixtieth information indicates the same K₁' ports corresponding to the Nₜₒₜ CSI-RS resources. It should be noted that "the same K₁' ports in the Nₜₒₜ groups each including the K₁ selected ports corresponding to the Nₜₒₜ CSI-RS resources" may be described that: K₁' ports in K1 selected ports corresponding to any one CSI-RS resource in the Nₜₒₜ CSI-RS resources are the same as K₁' ports in K₁ selected ports corresponding to another CSI-RS resource in the Nₜₒₜ CSI-RS resources.

In some embodiments, the same K₁' ports may be indicated via $\left⌈{log}_{2}\left(\begin{matrix}{P}_{CSI - RS} / 2 \\ {K}_{1}^{′}\end{matrix}\right)\right⌉$ bits.

In some embodiments, the value of K₁' may be indicated via $\left⌈{log}_{2}\left(\frac{{K}_{1}}{2}\right)\right⌉$, in which $\frac{{K}_{1}}{2}$ represents a total number of ports selected in one polarization direction.

In some embodiments, remaining $\frac{{K}_{1}}{2} - {K}_{1}^{′}$ selected ports corresponding to one CSI-RS resource may be indicated via $\left⌈{log}_{2}\left(\begin{matrix}{P}_{CSI - RS} / 2 \\ \frac{{K}_{1}}{2} - {K}_{1}^{′}\end{matrix}\right)\right⌉$ bits.

In combination with the above embodiments, in some embodiments, in a case that the K₁' ports in the M₁₃ groups each including K₁ selected ports corresponding to the M₁₃ CSI-RS resources in the Nₜₒₜ CSI-RS resources are the same, the PMIs corresponding to the Nₜₒₜ CSI-RS resources may include the sixty-first information, and the sixty-first information indicates the same K₁' ports corresponding to the M₁₃ CSI-RS resources. Alternatively, the PMIs corresponding to the Nₜₒₜ CSI-RS resources may also include the sixty-second information, and the sixty-second information indicates the K₁ selected ports corresponding to each of the remaining CSI-RS resources.

In combination with the above embodiments, in some embodiments, in a case that the K₁ selected ports corresponding to the M₁₄ CSI-RS resources in the Nₜₒₜ CSI-RS resources are the same, the PMIs corresponding to the Nₜₒₜ CSI-RS resources may include the sixty-third information, and the sixty-third information indicates the same K₁ selected ports corresponding to the M₁₄ CSI-RS resources. Alternatively, the PMIs corresponding to the Nₜₒₜ CSI-RS resources may also include the sixty-fourth information, and the sixty-fourth information indicates the K₁ selected ports corresponding to each of the remaining CSI-RS resources.

In some embodiments, the K1 selected ports corresponding to one CSI-RS resource may be indicated via $\left⌈{log}_{2}\left(\begin{matrix}{P}_{CSI - RS} / 2 \\ {K}_{1} / 2\end{matrix}\right)\right⌉$ bits.

In some embodiments, for a Rel-17 port selection Type II codebook, for a method for indicating port selection corresponding to Nₜₒₜ CSI-RS resources reference may be made to the above embodiments.

In some embodiments, the names of information or the like are not limited to the names recorded in the embodiments. The terms such as "information", "message", "signal", "signaling", "report", "configuration", "indication", "instruction" "command", "channel", "parameter", "domain", "field", "symbol", "codeword", "codebook", "codepoint", "bit", "data", "program", and "chip" may be used interchangeably.

In some embodiments, the terms such as "codebook", "codeword" and "precoding matrix" may be used interchangeably. For example, a codebook may be a collection of one or more codewords/precoding matrices.

In some embodiments, "obtain", "acquire", "get", "receive", "transmit", "bidirectional transmission", "send and/or receive" may be used interchangeably, and may be interpreted as multiple meanings such as receiving from other entities, obtaining from a protocol, obtaining from a higher layer, obtaining by self-processing, autonomous implementation, etc.

In some embodiments, the terms such as "send", "emit", "report", "issue", "transmit", "bi-directionally transmit", "send and/or receive" or the like may be used interchangeably.

In some embodiments, the terms such as "certain", "predetermined", "preset", "set", "indicated", "a", "any", "first", or the like may be used interchangeably. "Certain A", "predetermined A", "preset A", "set A", "indicated A", "an A", "any A", "first A" may be interpreted as A predefined in a protocol, or as A obtained via setting, configuration, or indication, or as certain A, an A, any A, or first A, etc., but is not limited herein.

In some embodiments, please refer to other alternative implementations described before or after the description corresponding to FIG. 2.

FIG. 3 is a flow chart illustrating a communication method according to an embodiment of the disclosure. As illustrated in FIG. 3, embodiments of the disclosure relates to a communication method, applied to a terminal. The communication method includes the following.

At block S3101, configuration information sent from a network device is received.

For alternative implementation manners of block S3101, please refer to the alternative implementation manners of block S2101 in FIG. 2 and other related parts in the embodiments involved in FIG. 2, which is not repeated herein.

In some embodiments, the configuration information is used to configure Kₛ CSI-RS resources, in which Kₛ is an integer greater than 1. The terminal selects Nₜₒₜ CSI-RS resources from the configured Kₛ CSI-RS resources.

At block S3102, first information is sent to the network device.

For alternative implementation manners of block S3102, please refer to the alternative implementation manners of block S2102 in FIG. 2 and other related parts in the embodiments involved in FIG. 2, which is not repeated herein.

In some embodiments, the first information includes CSI-RS resource indication information, the CSI-RS resource indication information indicates Nₜₒₜ CSI-RS resources selected by the terminal, and the first information also includes PMIs corresponding to the Nₜₒₜ CSI-RS resources respectively, in which Nₜₒₜ is an integer greater than 1 and Nₜₒₜ is less than or equal to Kₛ.

FIG. 4 is a flow chart illustrating a communication method according to an embodiment of the disclosure. As illustrated in FIG. 4, embodiments of the disclosure relates to a communication method, applied to a network device. The communication method includes the following.

At block S4101, configuration information is sent to a terminal.

For alternative implementation manners of block S4101, please refer to the alternative implementation manners of block S2101 in FIG. 2 and other related parts in the embodiments involved in FIG. 2, which is not repeated herein.

In some embodiments, the configuration information is used to configure Kₛ CSI-RS resources, in which Kₛ is an integer greater than 1. The terminal selects Nₜₒₜ CSI-RS resources from the configured Kₛ CSI-RS resources.

At block S4102, first information sent from the terminal is received.

For alternative implementation manners of block S4102, please refer to the alternative implementation manners of block S2102 in FIG. 2 and other related parts in the embodiments involved in FIG. 2, which is not repeated herein.

In some embodiments, the first information includes CSI-RS resource indication information, the CSI-RS resource indication information indicates Nₜₒₜ CSI-RS resources selected by the terminal, and the first information also includes PMIs corresponding to the Nₜₒₜ CSI-RS resources respectively, in which Nₜₒₜ is an integer greater than 1 and Nₜₒₜ is less than or equal to Kₛ.

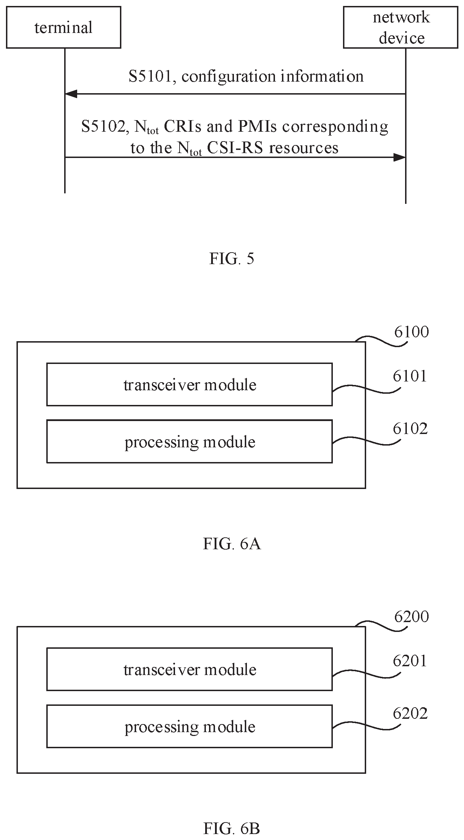

FIG. 5 is an interaction flow chart illustrating a communication method according to an embodiment of the disclosure. As illustrated in FIG. 5, embodiments of the disclosure relate to a communication method. The communication method includes the following.

At step S5101, a network device sends configuration information to a terminal.

The network device configures Kₛ CSI-RS resources for the terminal via the configuration information.

At step S5102, the terminal sends Nₜₒₜ CRIs and PMIs corresponding to Nₜₒₜ CSI-RS resources to the network device.

Alternative embodiments of the terminal reporting the PMIs corresponding to the Nₜₒₜ CSI-RS resources in the above step S5102 are described below respectively in combination with the Rel-15 Type I single-panel codebook, the Rel-15 Type I multi-panel codebook, the Rel-15 Type II codebook, the Rel-16 Type II codebook, and the Rel-17 port selection Type II codebook.

### (1) Rel-15 Type I single-panel codebook

A method for indicating spatial domain basis vectors corresponding to the Nₜₒₜ CSI-RS resources includes the following options.

Option1: all or M (M < Nₜₒₜ) of the reported Nₜₒₜ CSI-RS resources correspond to same spatial domain basis vector indication information in the horizontal dimension and the vertical dimension. The spatial domain basis vector indication information in the horizontal dimension and the vertical dimension indicates one spatial domain basis vector in the horizontal dimension and the vertical dimension. In a case that the M CSI-RS resources correspond to the same spatial domain basis vector indication information in the horizontal dimension and the vertical dimension, spatial domain basis vector indication information in the horizontal dimension and the vertical dimension respectively corresponding to the remaining CSI-RS resources are reported separately. In a case that the M CSI-RS resources correspond to the same spatial domain basis vector indication information in the horizontal dimension and the vertical dimension, the terminal also reports additional indication information indicating which part of the CSI-RS resources correspond to the same spatial domain basis vector indication information in the horizontal dimension and the vertical dimension. A size of the additional indication information may be indicated via a bitmap with a size being Nₜₒₜ bits or Ks bits, or indicated via $\left⌈{log}_{2}^{{C}_{{N}_{tot}}^{M}}\right⌉ + \left⌈{log}_{2}^{{N}_{tot}}\right⌉$ bits, or indicated via $\left⌈{log}_{2}^{{C}_{{K}_{s}}^{M}}\right⌉ + \left⌈{log}_{2}^{{K}_{s}}\right⌉$ bits. Alternatively, in a case that M is configured by the network device, the size of the additional indication information may be indicated via $\left⌈{log}_{2}^{{C}_{{N}_{tot}}^{M}}\right⌉$ bits or $\left⌈{log}_{2}^{{C}_{{K}_{s}}^{M}}\right⌉$ bits.

Option2: all or M (< Nₜₒₜ) of the reported Nₜₒₜ CSI-RS resources correspond to same spatial domain basis vector indication information in the horizontal dimension and/or same spatial domain basis vector indication information in the vertical dimension. The spatial domain basis vector indication information in the horizontal dimension indicates one spatial domain basis vector in the horizontal dimension, and the spatial domain basis vector indication information in the vertical dimension indicates one spatial domain basis vector in the vertical dimension. In a case that the M CSI-RS resources correspond to the same spatial domain basis vector indication information in the horizontal dimension, spatial domain basis vector indication information in the horizontal dimension respectively corresponding to the remaining CSI-RS resources are reported separately. Similarly, in a case that the M CSI-RS resources correspond to the same spatial domain basis vector indication information in the vertical dimension, the spatial domain basis vector indication information in the vertical dimension respectively corresponding to the remaining CSI-RS resources are reported separately. In a case that the M CSI-RS resources correspond to the same spatial domain basis vector indication information in the horizontal dimension and/or the vertical dimension, the terminal also reports additional indication information indicating which part of the CSI-RS resources correspond to the same spatial domain basis vector indication information in the horizontal dimension and/or the vertical dimension. A size of the additional indication information is the same as that in Option1.

Option3: the terminal additionally reports 1 bit to indicate whether a spatial domain basis vector in the horizontal dimension corresponding to each CSI-RS resource in the Nₜₒₜ CSI-RS resources are the same as a spatial domain basis vector in the vertical dimension corresponding to the CSI-RS resource in the Nₜₒₜ CSI-RS resources; if the same, indication is performed by using the method described in Option1; if not the same, the spatial domain basis vector in the horizontal dimension and the spatial domain basis vector in the vertical dimension of each CSI-RS resource are indicated separately. Alternatively, if some domain basis vectors are same in the horizontal dimension and/or vertical dimension, indication may be performed based on the method described in Option1.

A method for indicating spatial domain basis vector offset information corresponding to the Nₜₒₜ CSI-RS resources includes the following.

All or M (< Nₜₒₜ) of the reported Nₜₒₜ CSI-RS resources correspond to the same spatial domain basis vector offset information. In a case that the M CSI-RS resources correspond to the same spatial domain basis vector offset information, the terminal also reports additional indication information indicating which part of the CSI-RS resources correspond to the same spatial domain basis vector offset information. A size of the additional indication information is the same as that described in Option1.

Alternatively, the terminal additionally reports 1 bit to indicate whether spatial domain basis vector offset information respectively corresponding to the Nₜₒₜ CSI-RS resources are the same; if the same, only one indication information needs to be reported; if not the same, the spatial domain basis vector offset information respectively corresponding to the Nₜₒₜ CSI-RS resources are indicated separately.

### (2) Rel-15 Type I multi-panel codebook

A method for indicating a spatial domain basis vector and a method for indicating spatial domain basis vector offset information corresponding to the Ntot CSI-RS resources are the same as the indication methods of the above Rel-15 Type I single-panel codebook.

A method for indicating phase offset information between adjacent panels corresponding to the Nₜₒₜ CSI-RS resources includes the following.

All or M (< Nₜₒₜ) of the reported Nₜₒₜ CSI-RS resources correspond to same phase offset information between N_{g}-1 adjacent panels. In a case that the M CSI-RS resources correspond to the same phase offset information between the N_{g}-1 adjacent panels, the terminal also reports additional indication information indicating which part of the CSI-RS resources correspond to the same phase offset information between the N_{g}-1 adjacent panels. A size of the additional indication information is the same as that described in Option1.

### (3) Rel-15 Type II codebook

A method for indicating L spatial domain basis vectors corresponding to the Nₜₒₜ CSI-RS resources includes the following.

Alt1: the terminal reports indication information for indicating the same spatial domain basis vector group corresponding to all the Nₜₒₜ CSI-RS resources, in which a size of the indication information is $\left⌈{log}_{2}\left({O}_{1}{O}_{2}\right)\right⌉$ bits, and the method for indicating the L spatial domain basis vectors selected from N1N2 spatial domain basis vectors in the indicated spatial domain basis vector group includes:

Alt1-1: indication information of the selected L spatial domain basis vectors corresponding to each of the Nₜₒₜ CSI-RS resources is reported separately, in which a size of the indication information is $\left⌈{log}_{2}\left(\begin{matrix}{N}_{1} {N}_{2} \\ L\end{matrix}\right)\right⌉$ bits.

Alt1-2: indication information of the selected L spatial domain basis vectors corresponding to M (< Nₜₒₜ) CSI-RS resources in the Nₜₒₜ CSI-RS resources is the same, indication information of the selected L spatial domain basis vectors corresponding to each of remaining CSI-RS resources is indicated separately, with a size of $\left⌈{log}_{2}\left(\begin{matrix}{N}_{1} {N}_{2} \\ L\end{matrix}\right)\right⌉$ bits. The terminal also indicates, via the method described in Option1, same indication information of selected L spatial domain basis vectors corresponding to the M CSI-RS resources.

Alt1-3: in the indication information of the selected L spatial domain basis vectors corresponding to the Nₜₒₜ CSI-RS resources or the M (< Nₜₒₜ) CSI-RS resources, indication information of L' (< L) basis vectors is the same, the terminal indicates the same part of spatial domain basis vectors via $\left⌈{log}_{2}\left(\begin{matrix}{N}_{1} {N}_{2} \\ L ′\end{matrix}\right)\right⌉$ bits, and indicates a value of L' via $\left⌈{log}_{2}\left(L\right)\right⌉$ bits. The terminal also indicates the remaining L-L' spatial domain basis vectors corresponding to each CSI-RS resource via $\left⌈{log}_{2}\left(\begin{matrix}{N}_{1} {N}_{2} \\ L - L ′\end{matrix}\right)\right⌉$ bits.

Alt1-4: the indication information of the same L spatial domain basis vectors selected corresponding to the Nₜₒₜ CSI-RS resources is the same, and the same L spatial domain basis vectors are indicated via $\left⌈{log}_{2}\left(\begin{matrix}{N}_{1} {N}_{2} \\ L\end{matrix}\right)\right⌉$ bits. The terminal further additionally reports 1 bit to indicate whether all instances of indication information of the same L spatial domain basis vectors selected corresponding to the Nₜₒₜ CSI-RS resources are the same. If all different, indication may be performed via the method of Alt1-1 or Alt1-3; if some is the same, indication may be performed via the method of Alt1-2.

Alt2: indication information of the same spatial domain basis vector group corresponding to the M (< Nₜₒₜ) CSI-RS resources is the same, the same spatial domain basis vector group is indicated via $\left⌈{log}_{2}\left({O}_{1}{O}_{2}\right)\right⌉$ bits, and the method for indicating the L spatial domain basis vectors selected from the N₁N₂ spatial domain basis vectors is the same as that in the above Alt1-1 to Alt1-4. For the remaining Nₜₒₜ-M CSI-RS resources, the terminal also separately reports $\left⌈{log}_{2}\left({O}_{1}{O}_{2}\right)\right⌉ + \left⌈{log}_{2}\left(\begin{matrix}{N}_{1} {N}_{2} \\ L\end{matrix}\right)\right⌉$ bits to indicate the selected L spatial domain basis vectors corresponding to each of remaining CSI-RS resources. Alternatively, the method in the above Option1 indicates the same indication information of the spatial domain basis vector group corresponding to the part of the CSI-RS resources.

Alt3: the terminal reports indication information of the same L' spatial domain basis vectors corresponding to the Nₜₒₜ CSI-RS resources, a size of the indication information is $\left⌈{log}_{2}\left(\begin{matrix}{O}_{1} {O}_{2} {N}_{1} {N}_{2} \\ L ′\end{matrix}\right)\right⌉$ bits, and a value of L' is indicated via $\left⌈{log}_{2}\left(L\right)\right⌉$ bits. The terminal also reports $\left⌈{log}_{2}\left(\begin{matrix}{O}_{1} {O}_{2} {N}_{1} {N}_{2} \\ L - L ′\end{matrix}\right)\right⌉$ bits to indicate the remaining L-L' spatial domain basis vectors corresponding to each CSI-RS resource.

### (4) Rel-16 Type II codebook

A method for indicating the spatial domain basis vectors corresponding to the Nₜₒₜ CSI-RS resources is the same as the method for indicating the spatial domain basis vectors of the Rel-15 Type II codebook.

A method for indicating frequency domain basis vectors corresponding to the Nₜₒₜ CSI-RS resources includes the following.

For N₃ ≤ 19:
Optl-1: the terminal reports same Mᵥ' (< Mᵥ) frequency domain basis vectors corresponding to the Nₜₒₜ CSI-RS resources, indicates the same Mᵥ' frequency domain basis vectors via $\left⌈{log}_{2}\left(\begin{matrix}{N}_{3} - 1 \\ {M}_{ν}^{′}\end{matrix}\right)\right⌉$ bits, and reports $\left⌈{log}_{2}\left({M}_{ν}\right)\right⌉$ bits to indicate a value of Mᵥ'. The terminal also separately reports $\left⌈{log}_{2}\left(\begin{matrix}{N}_{3} - 1 \\ {M}_{ν} - {M}_{ν}^{′} - 1\end{matrix}\right)\right⌉$ bits to indicate the remaining Mᵥ-Mᵥ'-1 frequency domain basis vectors corresponding to each CSI-RS resource.

Opt1-2: the M (< Nₜₒₜ) CSI-RS resources correspond to same Mᵥ frequency domain basis vectors, and the same Mᵥ frequency domain basis vectors are indicated via $\left⌈{log}_{2}\left(\begin{matrix}{N}_{3} - 1 \\ {M}_{ν} - 1\end{matrix}\right)\right⌉$ bits. For the remaining Ntₒₜ-M CSI-RS resources, the terminal also reports $\left⌈{log}_{2}\left(\begin{matrix}{N}_{3} - 1 \\ {M}_{ν} - 1\end{matrix}\right)\right⌉$ bits to indicate the Mᵥ frequency domain basis vectors corresponding to each of the remaining CSI-RS resources.

Opt1-3: a window with a size of W is predefined or indicated, where W<N3. For the Mᵥ frequency domain basis vectors corresponding to each CSI-RS resource, the terminal performs indication via $\left⌈{log}_{2}\left(\begin{matrix}W - 1 \\ {M}_{ν} - 1\end{matrix}\right)\right⌉$ bits. A start point of the window may be indicated by the terminal via $\left⌈{log}_{2}\left(W\right)\right⌉$ bits, or the start point of the window is determined based on a predefinition. Alternatively, for the Mᵥ frequency domain basis vectors corresponding to each CSI-RS resource, the terminal indicates the start point of the window via $\left⌈{log}_{2}\left(W\right)\right⌉$ bits, and then indicates the Mᵥ frequency domain basis vectors selected by the terminal via $\left⌈{log}_{2}\left(\begin{matrix}W - 1 \\ {M}_{ν} - 1\end{matrix}\right)\right⌉$ bits.

For N3 > 19:
Opt2-1: start points of frequency domain basis vector windows respectively corresponding to the Nₜₒₜ CSI-RS resources are the same. Assuming that A size of the frequency domain basis vector window is 2Mᵥ, the terminal indicates the start point of the window via $\left⌈{log}_{2}\left(2{M}_{ν}\right)\right⌉$ bits, and then indicates the selected Mv frequency domain basis vectors corresponding to each CSI-RS resource via $\left⌈{log}_{2}\left(\begin{matrix}2 {M}_{ν} - 1 \\ {M}_{ν} - 1\end{matrix}\right)\right⌉$ bits.

Opt2-2: the start points of the frequency domain basis vector windows respectively corresponding to the Nₜₒₜ CSI-RS resources are the same, the terminal indicates same Mᵥ' frequency domain basis vectors via $\left⌈{log}_{2}\left(\begin{matrix}2 {M}_{ν} - 1 \\ {M}_{ν}^{′}\end{matrix}\right)\right⌉$ bits, and reports $\left⌈{log}_{2}\left(2{M}_{ν}\right)\right⌉$ bits to indicate a value of Mᵥ'. The terminal also indicates the remaining Mᵥ-Mᵥ'-1 frequency domain basis vectors corresponding to each CSI-RS resource via $\left⌈{log}_{2}\left(\begin{matrix}2 {M}_{ν} - 1 \\ {M}_{ν} - {M}_{ν}^{′} - 1\end{matrix}\right)\right⌉$ bits.

Opt2-3: start points of frequency domain basis vector windows respectively corresponding to the M (< Nₜₒₜ) CSI-RS resources are the same, and frequency domain basis vectors corresponding to each of the remaining Nₜₒₜ-M CSI-RS resources are indicated via $\left⌈{log}_{2}\left(2{M}_{ν}\right)\right⌉ + \left⌈{log}_{2}\left(\begin{matrix}2 {M}_{ν} - 1 \\ {M}_{ν} - 1\end{matrix}\right)\right⌉$ bits. For the M CSI-RS resources, the method for the terminal to indicate the selected Mᵥ frequency domain basis vectors is the same as that in Opt2-1 and Opt2-2.

Opt2-4: the start points of the frequency domain basis vector windows respectively corresponding to the Nₜₒₜ CSI-RS resources are the same, and the selected Mᵥ frequency domain basis vectors are also the same, the same Mᵥ frequency domain basis vectors corresponding to the Nₜₒₜ CSI-RS resources are indicated via $\left⌈{log}_{2}\left(2{M}_{ν}\right)\right⌉ + \left⌈{log}_{2}\left(\begin{matrix}2 {M}_{ν} - 1 \\ {M}_{ν} - 1\end{matrix}\right)\right⌉$ bits. Alternatively, the terminal reports 1 bit to indicate whether the start points of the frequency domain basis vector windows respectively corresponding to the Nₜₒₜ CSI-RS resources are the same, and if not the same, the start point of the frequency domain basis vector window corresponding to each CSI-RS resource needs to be indicated separately; and then indicates, via 1 bit, whether the selected frequency domain basis vectors corresponding to the Nₜₒₜ CSI-RS resources are also the same, and if not the same, indication may be performed by using the above methods of Opt2-1 to Opt2-3.

### (5) Rel-17 port selection Type II codebook

A method for indicating port selection corresponding to the Nₜₒₜ CSI-RS resources includes the following.

The terminal reports indication information of same K₁' ports selected corresponding to the Nₜₒₜ CSI-RS resources or the M (< Nₜₒₜ) CSI-RS resources, and also indicates the remaining $\frac{{K}_{1}}{2} - {K}_{1}^{′}$ selected ports via $\left⌈{log}_{2}\left(\begin{matrix}{P}_{CSI - RS} / 2 \\ \frac{{K}_{1}}{2} - {K}_{1}^{′}\end{matrix}\right)\right⌉$ bits. The terminal indicates the same K₁' ports via $\left⌈{log}_{2}\left(\begin{matrix}{P}_{CSI - RS} / 2 \\ {K}_{1}^{′}\end{matrix}\right)\right⌉$ bits, and reports $\left⌈{log}_{2}\left(\frac{{K}_{1}}{2}\right)\right⌉$ bits to indicate a value of K₁'. If the M (< Nₜₒₜ) CSI-RS resources correspond to indication information of same K₁ ports selected, port selections corresponding to each of the remaining Nₜₒₜ-M CSI-RS resources are indicated via $\left⌈{log}_{2}\left(\begin{matrix}{P}_{CSI - RS} / 2 \\ {K}_{1} / 2\end{matrix}\right)\right⌉$ bits.

Further description is made below in combination with detailed embodiments.

### Rel-15 Type I single-panel codebook

It is assumed that a UE needs to report 4 PMIs respectively corresponding to 4 CSI-RS resources. For a spatial domain basis vector indication of the 4 PMIs, the UE reports $\left⌈{log}_{2} {N}_{1} {O}_{1}\right⌉$ bits to indicate a spatial domain basis vector in a horizontal dimension, and then reports $\left⌈{log}_{2} {N}_{2} {O}_{2}\right⌉$ bits to indicate a spatial domain basis vector in a vertical dimension. Alternatively, the UE also indicates, by reporting 1 bit, whether spatial domain basis vectors included in the 4 PMIs are the same. If not the same, the spatial domain basis vectors included in the 4 PMIs may be respectively indicated. If spatial domain basis vectors included in PMIs corresponding to 2 CSI-RS resources are the same, the UE may indicate, via a bitmap with a size of Kₛ=6 bits, that the spatial domain basis vectors included in the PMIs corresponding to the 2 CSI-RS resources are the same, as illustrated in Table 2.

**Table 2**

| | | | | | |
|---|---|---|---|---|---|
| 0 | 1 | 0 | 1 | 0 | 0 |

In Table 2, "1" in the bitmap indicates "same", that is, the spatial domain basis vectors included in the PMIs corresponding to the second CSI-RS resource and the fourth CSI-RS resource are the same, and the spatial domain basis vectors included in the PMIs corresponding to remaining CSI-RS resources are indicated separately.

A method for indicating spatial domain basis vector offset information is similar to the above method for indicating a spatial domain basis vector.

### Rel-15 Type II codebook

It is still assumed that the UE needs to report 4 PMIs respectively corresponding to 4 CSI-RS resources.

The UE first indicates, via 1 bit, that indication information of 4 spatial domain basis vector groups is the same, and indicates the same spatial domain basis vector group via $\left⌈{log}_{2}\left({O}_{1}{O}_{2}\right)\right⌉$ bits. If indication is performed by using the Alt1-3 method in the above embodiment, the L spatial domain basis vectors included in the PMIs corresponding to the 4 CSI-RS resources are indicated via a total of $\left⌈{log}_{2}\left(\begin{matrix}{N}_{1} {N}_{2} \\ L ′\end{matrix}\right)\right⌉ + \left⌈{log}_{2}\left(L\right)\right⌉ + \left⌈{log}_{2}\left(\begin{matrix}{N}_{1} {N}_{2} \\ L - L ′\end{matrix}\right)\right⌉ * 4$ bits.

### Rel-16 Type II codebook

A method for indicating a frequency domain basis vector includes the following.

In a case that N3 ≤ 19:
if indication is performed by using the Opt1-3 method, it is assumed that the size of the window is predefined and defined as W=3Mᵥ. A start point of the window is indicated by the UE via reporting $\left⌈{log}_{2}\left(W\right)\right⌉$ bits, and then, the frequency domain basis vectors included in the PMI corresponding to each CSI-RS resource are indicated via $\left⌈{log}_{2}\left(\begin{matrix}W - 1 \\ {M}_{ν} - 1\end{matrix}\right)\right⌉$ bits.

In a case that N3 > 19:
if indication is performed by using the Opt2-2 method, the UE reports $\left⌈{log}_{2}\left(\begin{matrix}2 {M}_{ν} - 1 \\ {M}_{ν}^{′}\end{matrix}\right)\right⌉$ bits to indicate the same Mᵥ' frequency domain basis vectors, and then indicates the remaining Mᵥ-Mᵥ'-1 frequency domain basis vectors included in the PMI corresponding to each CSI-RS resource via $\left⌈{log}_{2}\left(\begin{matrix}2 {M}_{ν} - 1 \\ {M}_{ν} - {M}_{ν}^{′} - 1\end{matrix}\right)\right⌉$ bits.

According to the embodiments of the disclosure, the feedback overhead of the terminal may be reduced in a case that the system performance remains unchanged.

In embodiments of the disclosure, some or all steps and alternative implementations of the steps may be arbitrarily combined with some or all steps in other embodiments, and may also be arbitrarily combined with alternative implementations of other embodiments.

Embodiments of the disclosure also provide an apparatus for implementing any one of the above methods. For example, an apparatus is provided, including units or modules for performing the steps executed by the terminal in any one of the above methods. For example, another apparatus is provided, including units or modules for performing the steps executed by the network device (e.g., access network device, core network function node, core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 6A is a block diagram illustrating a communication apparatus according to an embodiment of the disclosure. As illustrated in FIG. 6A, the communication apparatus 6100 may include at least one of a transceiver module 6101, a processing module 6102, or the like. In some embodiments, the transceiver module 6101 is configured to receive configuration information sent from a network device, in which the configuration information is used to configure Kₛ CSI-RS resources, in which Kₛ is an integer greater than 1. The transceiver module 6101 is also configured to send first information to the network device, in which the first information includes CSI-RS resource indication information, the CSI-RS resource indication information indicates Nₜₒₜ CSI-RS resources selected by the terminal, and the first information also includes PMIs corresponding to the Nₜₒₜ CSI-RS resources respectively, in which Nₜₒₜ is an integer greater than 1 and Nₜₒₜ is less than or equal to Kₛ. Alternatively, the transceiver module is configured to perform at least one of the communication steps (e.g., S2102, but is not limited herein) such as sending and/or receiving performed by the terminal in any of the above methods, which is not repeated herein. Alternatively, the processing module is configured to perform at least one of other steps performed by the terminal in any of the above methods, which is not repeated herein.

FIG. 6B is a block diagram illustrating a communication apparatus according to an embodiment of the disclosure. As illustrated in FIG. 6B, the communication apparatus 6200 may include at least one of a transceiver module 6201, a processing module 6202, or the like. In some embodiments, the transceiver module 6201 is configured to send configuration information to a terminal, in which the configuration information is used to configure Kₛ CSI-RS resources, in which Kₛ is an integer greater than 1. The transceiver module 6201 is also configured to receive first information sent from a terminal, in which the first information includes CSI-RS resource indication information, the CSI-RS resource indication information indicates Nₜₒₜ CSI-RS resources selected by the terminal, and the first information further includes PMIs corresponding to the Nₜₒₜ CSI-RS resources respectively, in which Nₜₒₜ is an integer greater than 1 and Nₜₒₜ is less than or equal to Kₛ. Alternatively, the transceiver module is configured to perform at least one of the communication steps (e.g., S2101, but is not limited herein) such as sending and/or receiving performed by the network device in any of the above methods, which is not repeated herein. Alternatively, the processing module is configured to perform at least one of other steps performed by the network device in any of the above methods, which is not repeated herein.

In some embodiments, the transceiver module may include a transmitting module and/or a receiving module. The transmitting module and the receiving module may be separate or may be integrated. Alternatively, the transceiver module may be interchangeable with a transceiver.

In some embodiments, the processing module may be a single module, or may include multiple sub-modules. Alternatively, the multiple sub-modules perform all or part of the steps required to be performed by the processing module. Alternatively, the processing module may be interchangeable with a processor.

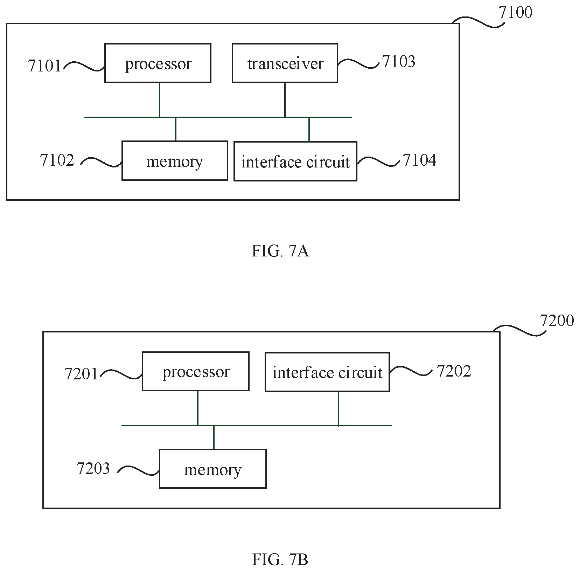

FIG. 7A is a block diagram illustrating a communication device 7100 according to an embodiment of the disclosure. The communication device 7100 may be a network device (such as, an access network device, a core network device, etc.), or a terminal (e.g., a UE, etc.), or a chip, a chip system, a processor, etc. that supports the network device to implement any one of the methods, or a chip, a chip system, a processor, etc. that supports the terminal to implement any one of the methods. The communication device 7100 may be configured to implement the method in the above method embodiments. For details, please refer to the description in the above method embodiments.

As illustrated in FIG. 7A, the communication device 7100 may include one or more processors 7101. The processor 7101 may be a general purpose processor or a special purpose processor, for example, a baseband processor or a central processing unit. The baseband processor may be configure to process communication protocols and communication data, and the central processing unit may be used to control communication devices (such as a base station, a baseband chip, a terminal, a terminal chip, a DU or a CU, etc.), perform programs, and process program data. The communication device 7100 is configured to execute any one of the above methods.

In some embodiments, the communication device 7100 also includes one or more memories 7102 for storing instructions. Alternatively, all or some of the memories 7102 may also be located outside the communication device 7100.

In some embodiments, the communication device 7100 also includes one or more transceivers 7103. When the communication device 7100 includes one or more transceivers 7103, the transceiver 7103 performs at least one of the communication steps (e.g., step S2101, step S2102, but not limited herein) such as sending and/or receiving in the above method, and the processor 7101 performs at least one of other steps.

In some embodiments, the transceiver may include a receiver and/or a transmitter. The receiver and/or the transmitter may be separate or integrated together. Alternatively, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In some embodiments, the communication device 7100 may include one or more interface circuits 7104. Alternatively, the interface circuit 7104 is connected to the memory 7102. The interface circuit 7104 may be configured to receive signals from the memory 7102 or other devices, and may be configured to send signals to the memory 7102 or other devices. For example, the interface circuit 7104 may read instructions stored in the memory 7102 and send the instructions to the processor 7101.

The communication device 7100 in the above embodiments may be a network device or a terminal, but a scope of the communication device 7100 in the disclosure is not limited herein, and a structure of the communication device 7100 may not be limited by FIG. 7A. The communication device may be an independent device or a part of a larger device. For example, the communication device may be: 1) an independent IC, or a chip, or a chip system or a subsystem; 2) a collection including one or more IC, alternatively, the IC collection also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 7B is a block diagram illustrating a chip 7200 according to an embodiment of the disclosure. For a case where the communication device 7100 may be a chip or a chip system, please refer to the block diagram of the chip 7200 illustrated in FIG. 7B, but not limited to this.

The chip 7200 includes one or more processors 7201. The chip 7200 is configured to perform any one of the above methods.

In some embodiments, the chip 7200 may also include one or more interface circuits 7202. Alternatively, the interface circuit 7202 is connected to a memory 7203. The interface circuit 7202 may be configured to receive signals from the memory 7203 or other devices, and may be configured to send signals to the memory 7203 or other devices. For example, the interface circuit 7202 may read the instructions stored in the memory 7203 and send the instructions to the processor 7201.

In some embodiments, the interface circuit 7202 performs at least one of the communication steps such as sending and/or receiving in the above method (e.g., step S2101, step S2102, but not limited herein), and the processor 7201 performs at least one of other steps.

In some embodiments, terms such as interface circuit, interface, transceiver pin, transceiver, etc. may be used interchangeably.

In some embodiments, the chip 7200 also includes one or more memories 7203 for storing instructions. Alternatively, all or some of the memories 7203 may be located outside the chip 7200.

The disclosure also provides a storage medium for storing instructions. When the instructions are run on the communication device 7100, the communication device 7100 is caused to perform any one of the above methods. Alternatively, the above storage medium is an electronic storage medium. Alternatively, the above storage medium is a computer-readable storage medium, which is not limited herein, and the above storage medium may also be a storage medium readable by other devices. Alternatively, the above storage medium may be a non-transitory storage medium, which is not limited herein, and the above storage medium may also be a transitory storage medium.

The disclosure also provides a program product. When the program product is performed by the communication device 7100, the communication device 7100 is caused to perform any one of the above methods. Alternatively, the above program product is a computer program product.

The disclosure also provides a computer program. When the computer program is run on a computer, the computer is caused to perform any one of the above methods.

## Claims

1. A communication method, performed by a terminal, comprising:
receiving configuration information sent from a network device, wherein the configuration information is used to configure Kₛ channel state information-reference signal (CSI-RS) resources, wherein Kₛ is an integer greater than 1; and
sending first information to the network device, wherein the first information comprises CSI-RS resource indication information, the CSI-RS resource indication information indicates Nₜₒₜ CSI-RS resources selected by the terminal, and the first information further comprises precoding matrix indicators (PMIs) corresponding to the Nₜₒₜ CSI-RS resources respectively, wherein Nₜₒₜ is an integer greater than 1 and Nₜₒₜ is less than or equal to Kₛ.

2. The method of claim 1, wherein the PMIs corresponding to the Nₜₒₜ CSI-RS resources comprise at least one of:
second information, indicating the same spatial domain basis vector in a first dimension and a second dimension corresponding to the Nₜₒₜ CSI-RS resources;
third information, indicating the same spatial domain basis vector in a first dimension and a second dimension corresponding to M₁ CSI-RS resources in the Nₜₒₜ CSI-RS resources;
fourth information, indicating spatial domain basis vectors in a first dimension and a second dimension respectively corresponding to remaining CSI-RS resources other than M₁ CSI-RS resources in the Nₜₒₜ CSI-RS resources; or
fifth information, indicating CSI-RS resources with the same spatial domain basis vector in a first dimension and a second dimension in the Nₜₒₜ CSI-RS resources.

3. The method of claim 1, wherein the PMIs corresponding to the Nₜₒₜ CSI-RS resources comprise at least one of:
sixth information, indicating the same spatial domain basis vector in a first dimension corresponding to the Nₜₒₜ CSI-RS resources;
seventh information, indicating the same spatial domain basis vector in a first dimension corresponding to M₂ CSI-RS resources in the Nₜₒₜ CSI-RS resources;
eighth information, indicating spatial domain basis vectors in a first dimension respectively corresponding to remaining CSI-RS resources other than M₂ CSI-RS resources in the Nₜₒₜ CSI-RS resources; or
ninth information, indicating CSI-RS resources with the same spatial domain basis vector in a first dimension in the Nₜₒₜ CSI-RS resources.

4. The method of claim 1 or 3, wherein the PMIs corresponding to the Nₜₒₜ CSI-RS resources comprise at least one of:
tenth information, indicating the same spatial domain basis vector in a second dimension corresponding to the Nₜₒₜ CSI-RS resources;
eleventh information, indicating the same spatial domain basis vector in a second dimension corresponding to M₃ CSI-RS resources in the Nₜₒₜ CSI-RS resources;
twelfth information, indicating spatial domain basis vectors in a second dimension respectively corresponding to remaining CSI-RS resources other than M₃ CSI-RS resources in the Nₜₒₜ CSI-RS resources; or
thirteenth information, indicating CSI-RS resources with the same spatial domain basis vector in a second dimension in the Nₜₒₜ CSI-RS resources.

5. The method of any one of claims 2 to 4, wherein the PMIs corresponding to the Nₜₒₜ CSI-RS resources further comprise:
fourteenth information, indicating whether a spatial domain basis vector in a first dimension corresponding to each of the Nₜₒₜ CSI-RS resources is the same as a spatial domain basis vector in a second dimension corresponding to the CSI-RS resource.

6. The method of any one of claims 1 to 5, wherein the PMIs corresponding to the Nₜₒₜ CSI-RS resources comprise at least one of:
fifteenth information, indicating same spatial domain basis vector offset information corresponding to the Nₜₒₜ CSI-RS resources;
sixteenth information, indicating same spatial domain basis vector offset information corresponding to M₄ CSI-RS resources in the Nₜₒₜ CSI-RS resources;
seventeenth information, indicating spatial domain basis vector offset information respectively corresponding to remaining CSI-RS resources other than M₄ CSI-RS resources in the Nₜₒₜ CSI-RS resources; or
eighteenth information, indicating CSI-RS resources with same spatial domain basis vector offset information in the Nₜₒₜ CSI-RS resources.

7. The method of any one of claims 1 to 6, wherein the PMIs corresponding to the Nₜₒₜ CSI-RS resources comprise at least one of:
nineteenth information, indicating same phase offset information corresponding to the Nₜₒₜ CSI-RS resources, the phase offset information comprising a phase offset between adjacent panels in N_{g} panels;
twentieth information, indicating same phase offset information corresponding to M₅ CSI-RS resources in the Nₜₒₜ CSI-RS resources; or
twenty-first information, indicating CSI-RS resources with same phase offset information in the Nₜₒₜ CSI-RS resources.

8. The method of claim 1, wherein one CSI-RS resource corresponds to one spatial domain basis vector group, and the PMIs corresponding to the Nₜₒₜ CSI-RS resources comprise:
twenty-second information, indicating the same spatial domain basis vector group corresponding to the Nₜₒₜ CSI-RS resources, the spatial domain basis vector group being used to select L spatial domain basis vectors;
and the PMIs corresponding to the Nₜₒₜ CSI-RS resources further comprise at least one of:
twenty-third information, indicating L spatial domain basis vectors corresponding to each of the Nₜₒₜ CSI-RS resources based on the spatial domain basis vector group;
twenty-fourth information, indicating same L spatial domain basis vectors corresponding to the Nₜₒₜ CSI-RS resources based on the spatial domain basis vector group;
twenty-fifth information, indicating whether Nₜₒₜ groups each comprising L spatial domain basis vectors corresponding to the Nₜₒₜ CSI-RS resources are the same;
twenty-sixth information, indicating same L spatial domain basis vectors corresponding to M₆ CSI-RS resources in the Nₜₒₜ CSI-RS resources based on the spatial domain basis vector group;
twenty-seventh information, indicating L spatial domain basis vectors corresponding to each of remaining CSI-RS resources other than M₆ CSI-RS resources in the Nₜₒₜ CSI-RS resources based on the spatial domain basis vector group;
twenty-eighth information, indicating same L' spatial domain basis vectors in Nₜₒₜ groups each comprising L spatial domain basis vectors corresponding to the Nₜₒₜ CSI-RS resources based on the spatial domain basis vector group, the L' spatial domain basis vectors being comprised in each group, and remaining L-L' spatial domain basis vectors corresponding to each of the Nₜₒₜ CSI-RS resources, and indicating a value of L';
twenty-ninth information, indicating same L' spatial domain basis vectors in M₇ groups each comprising L spatial domain basis vectors corresponding to M₇ CSI-RS resources in the Nₜₒₜ CSI-RS resources based on the spatial domain basis vector group, the L' spatial domain basis vectors being comprised in each group, and remaining L-L' spatial domain basis vectors corresponding to each of the M₇ CSI-RS resources, and indicating a value of L';
thirtieth information, indicating L spatial domain basis vectors corresponding to each of remaining CSI-RS resources other than M₇ CSI-RS resources in the Nₜₒₜ CSI-RS resources based on the spatial domain basis vector group; or
thirty-first information, indicating CSI-RS resources corresponding to same L spatial domain basis vectors in the Nₜₒₜ CSI-RS resources.

9. The method of claim 1, wherein one CSI-RS resource corresponds to one spatial domain basis vector group, and the PMIs corresponding to the Nₜₒₜ CSI-RS resources comprise:
thirty-second information, indicating the same spatial domain basis vector group corresponding to M₈ CSI-RS resources in the Nₜₒₜ CSI-RS resources, the spatial domain basis vector group being used to select L spatial domain basis vectors; and
thirty-third information, indicating CSI-RS resources corresponding to the same spatial domain basis vector group in the Nₜₒₜ CSI-RS resources;
and the PMIs corresponding to the Nₜₒₜ CSI-RS resources further comprise at least one of:
thirty-fourth information, indicating L spatial domain basis vectors corresponding to each of the M₈ CSI-RS resources based on the spatial domain basis vector group;
thirty-fifth information, indicating same L spatial domain basis vectors corresponding to the M₈ CSI-RS resources based on the spatial domain basis vector group;
thirty-sixth information, indicating whether M₈ groups each comprising L spatial domain basis vectors corresponding to the M₈ CSI-RS resources are the same;
thirty-seventh information, indicating same L spatial domain basis vectors corresponding to M₉ CSI-RS resources in the M₈ CSI-RS resources based on the spatial domain basis vector group;
thirty-eighth information, indicating L spatial domain basis vectors corresponding to each of remaining CSI-RS resources other than M₉ CSI-RS resources in the M₈ CSI-RS resources based on the spatial domain basis vector group;
thirty-ninth information, indicating same L' spatial domain basis vectors in M₈ groups each comprising L spatial domain basis vectors corresponding to the M₈ CSI-RS resources based on the spatial domain basis vector group, the L' spatial domain basis vectors being comprised in each group, remaining L-L' spatial domain basis vectors corresponding to each of the M₈ CSI-RS resources, and indicating a value of L';
fortieth information, indicating same L' spatial domain basis vectors in M₁₀ groups each comprising L spatial domain basis vectors corresponding to M₁₀ CSI-RS resources in the M₈ CSI-RS resources based on the spatial domain basis vector group, the L' spatial domain basis vectors being comprised in each group, remaining L-L' spatial domain basis vectors corresponding to each of the M₁₀ CSI-RS resources, and indicating a value of L';
forty-first information, indicating L spatial domain basis vectors corresponding to each of remaining CSI-RS resources other than M₁₀ CSI-RS resources in the M₈ CSI-RS resources based on the spatial domain basis vector group;
forty-second information, indicating CSI-RS resources corresponding to same L spatial domain basis vectors in M₈ CSI-RS resources; or
forty-third information, indicating a spatial domain basis vector group corresponding to each of remaining CSI-RS resources other than M₈ CSI-RS resources in the Nₜₒₜ CSI-RS resources, and indicating L spatial domain basis vectors corresponding to each of the remaining CSI-RS resources based on the spatial domain basis vector group corresponding to each of the remaining CSI-RS resources.

10. The method of claim 1, wherein the PMIs corresponding to the Nₜₒₜ CSI-RS resources comprise:
forty-fourth information, indicating same L' spatial domain basis vectors in Nₜₒₜ groups each comprising L spatial domain basis vectors corresponding to the Nₜₒₜ CSI-RS resources, the L' spatial domain basis vectors being comprised in each group, remaining L-L' spatial domain basis vectors corresponding to each of the Nₜₒₜ CSI-RS resources, and indicating a value of L'.

11. The method of any one of claims 8 to 10, wherein the PMIs corresponding to the Nₜₒₜ CSI-RS resources comprise at least one of:
forty-fifth information, indicating same Mᵥ' frequency domain basis vectors in Nₜₒₜ groups each comprising Mᵥ frequency domain basis vectors corresponding to the Nₜₒₜ CSI-RS resources, the Mᵥ' frequency domain basis vectors being comprised in each group, remaining frequency domain basis vectors other than the Mᵥ' frequency domain basis vectors corresponding to each of the Nₜₒₜ CSI-RS resources, and indicating a value of Mᵥ';
forty-sixth information, indicating same Mᵥ frequency domain basis vectors corresponding to M₁₁ CSI-RS resources in the Nₜₒₜ CSI-RS resources;
forty-seventh information, indicating Mᵥ frequency domain basis vectors corresponding to each of remaining CSI-RS resources other than the M₁₁ CSI-RS resources in the Nₜₒₜ CSI-RS resources;
forty-eighth information, indicating a start point of a frequency domain basis vector window; or
forty-ninth information, indicating Mᵥ frequency domain basis vectors corresponding to each of the Nₜₒₜ CSI-RS resources based on a start point of a frequency domain basis vector window, a length of the frequency domain basis vector window being lower than a number N₃ of subbands.

12. The method of any one of claims 8 to 10, wherein one CSI-RS resource corresponds to one frequency domain basis vector window;
and the PMIs corresponding to the Nₜₒₜ CSI-RS resources comprise at least one of:
fiftieth information, indicating the same start point of frequency domain basis vector windows respectively corresponding to the Nₜₒₜ CSI-RS resources;
fifty-first information, indicating Mᵥ frequency domain basis vectors corresponding to each of the Nₜₒₜ CSI-RS resources based on the same start point corresponding to the Nₜₒₜ CSI-RS resources;
fifty-second information, indicating same Mᵥ' frequency domain basis vectors in Nₜₒₜ groups each comprising Mᵥ frequency domain basis vectors corresponding to the Nₜₒₜ CSI-RS resources based on the same start point corresponding to the Nₜₒₜ CSI-RS resources, the Mᵥ' frequency domain basis vectors being comprised in each group, remaining frequency domain basis vectors other than the Mᵥ' frequency domain basis vectors corresponding to each of the Nₜₒₜ CSI-RS resources, and indicating a value of Mᵥ';
fifty-third information, indicating same Mᵥ frequency domain basis vectors corresponding to the Nₜₒₜ CSI-RS resources based on the same start point corresponding to the Nₜₒₜ CSI-RS resources;
fifty-fourth information, indicating the same start point of frequency domain basis vector windows respectively corresponding to M₁₂ CSI-RS resources in the Nₜₒₜ CSI-RS resources;
fifty-fifth information, indicating Mᵥ frequency domain basis vectors corresponding to each of M₁₂ CSI-RS resources based on the same start point corresponding to the M₁₂ CSI-RS resources;
fifty-sixth information, indicating start points of frequency domain basis vector windows respectively corresponding to remaining CSI-RS resources other than M₁₂ CSI-RS resources in the Nₜₒₜ CSI-RS resources;
fifty-seventh information, indicating Mᵥ frequency domain basis vectors corresponding to each of remaining CSI-RS resources based on start points of frequency domain basis vector windows respectively corresponding to the remaining CSI-RS resources other than M₁₂ CSI-RS resources;
fifty-eighth information, indicating whether start points of frequency domain basis vector windows respectively corresponding to the Nₜₒₜ CSI-RS resources are the same; or
fifty-ninth information, indicating whether Nₜₒₜ groups each comprising Mᵥ frequency domain basis vectors corresponding to the Nₜₒₜ CSI-RS resources are the same.

13. The method of claim 1, wherein the PMIs corresponding to the Nₜₒₜ CSI-RS resources comprise at least one of:
sixtieth information, indicating same K₁' ports in Nₜₒₜ group each comprising K₁ selected ports corresponding to the Nₜₒₜ CSI-RS resources, the K₁' ports being comprised in each group, remaining selected ports other than the K₁' ports corresponding to each of the Nₜₒₜ CSI-RS resources, and indicating a value of K₁';
sixty-first information, indicating same K₁' ports in M₁₃ groups each comprising K₁ selected ports corresponding to M₁₃ CSI-RS resources in the Nₜₒₜ CSI-RS resources, the K₁' ports being comprised in each group, remaining selected ports other than the K₁' ports corresponding to each of the M₁₃ CSI-RS resources, and indicating a value of K₁';
sixty-second information, indicating K₁ selected ports corresponding to each of remaining CSI-RS resources other than the M₁₃ CSI-RS resources in the Nₜₒₜ CSI-RS resources;
sixty-third information, indicating same K₁ selected ports corresponding to M₁₄ CSI-RS resources in the Nₜₒₜ CSI-RS resources; or
sixty-fourth information, indicating K₁ selected ports corresponding to each of remaining CSI-RS resources other than M₁₄ CSI-RS resources in the Nₜₒₜ CSI-RS resources.

14. A communication method, performed by a network device, comprising:
sending configuration information to a terminal, wherein the configuration information is used to configure Kₛ channel state information-reference signal (CSI-RS) resources, wherein Kₛ is an integer greater than 1; and
receiving first information sent from the terminal, wherein the first information comprises CSI-RS resource indication information, the CSI-RS resource indication information indicates Nₜₒₜ CSI-RS resources selected by the terminal, and the first information further comprises precoding matrix indicators (PMIs) corresponding to the Nₜₒₜ CSI-RS resources respectively, wherein Nₜₒₜ is an integer greater than 1 and Nₜₒₜ is less than or equal to Kₛ.

15. The method of claim 14, wherein the PMIs corresponding to the Nₜₒₜ CSI-RS resources comprise at least one of:
second information, indicating the same spatial domain basis vector in a first dimension and a second dimension corresponding to the Nₜₒₜ CSI-RS resources;
third information, indicating the same spatial domain basis vector in a first dimension and a second dimension corresponding to M₁ CSI-RS resources in the Nₜₒₜ CSI-RS resources;
fourth information, indicating spatial domain basis vectors in a first dimension and a second dimension respectively corresponding to remaining CSI-RS resources other than M₁ CSI-RS resources in the Nₜₒₜ CSI-RS resources; or
fifth information, indicating CSI-RS resources with the same spatial domain basis vector in a first dimension and a second dimension in the Nₜₒₜ CSI-RS resources.

16. The method of claim 14, wherein the PMIs corresponding to the Nₜₒₜ CSI-RS resources comprise at least one of:
sixth information, indicating the same spatial domain basis vector in a first dimension corresponding to the Nₜₒₜ CSI-RS resources;
seventh information, indicating the same spatial domain basis vector in a first dimension corresponding to M₂ CSI-RS resources in the Nₜₒₜ CSI-RS resources;
eighth information, indicating spatial domain basis vectors in a first dimension respectively corresponding to remaining CSI-RS resources other than M₂ CSI-RS resources in the Nₜₒₜ CSI-RS resources; or
ninth information, indicating CSI-RS resources with the same spatial domain basis vector in a first dimension in the Nₜₒₜ CSI-RS resources.

17. The method of claim 14 or 16, wherein the PMIs corresponding to the Nₜₒₜ CSI-RS resources comprise at least one of:
tenth information, indicating the same spatial domain basis vector in a second dimension corresponding to the Nₜₒₜ CSI-RS resources;
eleventh information, indicating the same spatial domain basis vector in a second dimension corresponding to M₃ CSI-RS resources in the Nₜₒₜ CSI-RS resources;
twelfth information, indicating spatial domain basis vectors in a second dimension respectively corresponding to remaining CSI-RS resources other than M₃ CSI-RS resources in the Nₜₒₜ CSI-RS resources; or
thirteenth information, indicating CSI-RS resources with the same spatial domain basis vector in a second dimension in the Nₜₒₜ CSI-RS resources.

18. The method of any one of claims 15 to 17, wherein the PMIs corresponding to the Nₜₒₜ CSI-RS resources further comprise:
fourteenth information, indicating whether a spatial domain basis vector in a first dimension corresponding to each of the Nₜₒₜ CSI-RS resources is the same as a spatial domain basis vector in a second dimension corresponding to the CSI-RS resource.

19. The method of any one of claims 14 to 18, wherein the PMIs corresponding to the Nₜₒₜ CSI-RS resources comprise at least one of:
fifteenth information, indicating same spatial domain basis vector offset information corresponding to the Nₜₒₜ CSI-RS resources;
sixteenth information, indicating same spatial domain basis vector offset information corresponding to M₄ CSI-RS resources in the Nₜₒₜ CSI-RS resources;
seventeenth information, indicating spatial domain basis vector offset information respectively corresponding to remaining CSI-RS resources other than M₄ CSI-RS resources in the Nₜₒₜ CSI-RS resources; or
eighteenth information, indicating CSI-RS resources with same spatial domain basis vector offset information in the Nₜₒₜ CSI-RS resources.

20. The method of any one of claims 14 to 19, wherein the PMIs corresponding to the Nₜₒₜ CSI-RS resources comprise at least one of:
nineteenth information, indicating same phase offset information corresponding to the Nₜₒₜ CSI-RS resources, the phase offset information comprising a phase offset between adjacent panels in N_{g} panels;
twentieth information, indicating same phase offset information corresponding to M₅ CSI-RS resources in the Nₜₒₜ CSI-RS resources; or
twenty-first information, indicating CSI-RS resources with same phase offset information in the Nₜₒₜ CSI-RS resources.

21. The method of claim 14, wherein one CSI-RS resource corresponds to one spatial domain basis vector group, and the PMIs corresponding to the Nₜₒₜ CSI-RS resources comprise:
twenty-second information, indicating the same spatial domain basis vector group corresponding to the Nₜₒₜ CSI-RS resources, the spatial domain basis vector group being used to select L spatial domain basis vectors;
and the PMIs corresponding to the Nₜₒₜ CSI-RS resources further comprise at least one of:
twenty-third information, indicating L spatial domain basis vectors corresponding to each of the Nₜₒₜ CSI-RS resources based on the spatial domain basis vector group;
twenty-fourth information, indicating same L spatial domain basis vectors corresponding to the Nₜₒₜ CSI-RS resources based on the spatial domain basis vector group;
twenty-fifth information, indicating whether Nₜₒₜ groups each comprising L spatial domain basis vectors corresponding to the Nₜₒₜ CSI-RS resources are the same;
twenty-sixth information, indicating same L spatial domain basis vectors corresponding to M₆ CSI-RS resources in the Nₜₒₜ CSI-RS resources based on the spatial domain basis vector group;
twenty-seventh information, indicating L spatial domain basis vectors corresponding to each of remaining CSI-RS resources other than M₆ CSI-RS resources in the Nₜₒₜ CSI-RS resources based on the spatial domain basis vector group;
twenty-eighth information, indicating same L' spatial domain basis vectors in Nₜₒₜ groups each comprising L spatial domain basis vectors corresponding to the Nₜₒₜ CSI-RS resources based on the spatial domain basis vector group, the L' spatial domain basis vectors being comprised in each group, and remaining L-L' spatial domain basis vectors corresponding to each of the Nₜₒₜ CSI-RS resources, and indicating a value of L';
twenty-ninth information, indicating same L' spatial domain basis vectors in M₇ groups each comprising L spatial domain basis vectors corresponding to M₇ CSI-RS resources in the Nₜₒₜ CSI-RS resources based on the spatial domain basis vector group, the L' spatial domain basis vectors being comprised in each group, and remaining L-L' spatial domain basis vectors corresponding to each of the M₇ CSI-RS resources, and indicating a value of L';
thirtieth information, indicating L spatial domain basis vectors corresponding to each of remaining CSI-RS resources other than M₇ CSI-RS resources in the Nₜₒₜ CSI-RS resources based on the spatial domain basis vector group; or
thirty-first information, indicating CSI-RS resources corresponding to same L spatial domain basis vectors in the Nₜₒₜ CSI-RS resources.

22. The method of claim 14, wherein one CSI-RS resource corresponds to one spatial domain basis vector group, and the PMIs corresponding to the Nₜₒₜ CSI-RS resources comprise:
thirty-second information, indicating the same spatial domain basis vector group corresponding to M₈ CSI-RS resources in the Nₜₒₜ CSI-RS resources, the spatial domain basis vector group being used to select L spatial domain basis vectors; and
thirty-third information, indicating CSI-RS resources corresponding to the same spatial domain basis vector group in the Nₜₒₜ CSI-RS resources;
and the PMIs corresponding to the Nₜₒₜ CSI-RS resources further comprise at least one of:
thirty-fourth information, indicating L spatial domain basis vectors corresponding to each of the M₈ CSI-RS resources based on the spatial domain basis vector group;
thirty-fifth information, indicating same L spatial domain basis vectors corresponding to the M₈ CSI-RS resources based on the spatial domain basis vector group;
thirty-sixth information, indicating whether M₈ groups each comprising L spatial domain basis vectors corresponding to the M₈ CSI-RS resources are the same;
thirty-seventh information, indicating same L spatial domain basis vectors corresponding to M₉ CSI-RS resources in the M₈ CSI-RS resources based on the spatial domain basis vector group;
thirty-eighth information, indicating L spatial domain basis vectors corresponding to each of remaining CSI-RS resources other than M₉ CSI-RS resources in the M₈ CSI-RS resources based on the spatial domain basis vector group;
thirty-ninth information, indicating same L' spatial domain basis vectors in M₈ groups each comprising L spatial domain basis vectors corresponding to the M₈ CSI-RS resources based on the spatial domain basis vector group, the L' spatial domain basis vectors being comprised in each group, remaining L-L' spatial domain basis vectors corresponding to each of the M₈ CSI-RS resources, and indicating a value of L';
fortieth information, indicating same L' spatial domain basis vectors in M₁₀ groups each comprising L spatial domain basis vectors corresponding to M₁₀ CSI-RS resources in the M₈ CSI-RS resources based on the spatial domain basis vector group, the L' spatial domain basis vectors being comprised in each group, remaining L-L' spatial domain basis vectors corresponding to each of the M₁₀ CSI-RS resources, and indicating a value of L';
forty-first information, indicating L spatial domain basis vectors corresponding to each of remaining CSI-RS resources other than M₁₀ CSI-RS resources in the M₈ CSI-RS resources based on the spatial domain basis vector group;
forty-second information, indicating CSI-RS resources corresponding to same L spatial domain basis vectors in M₈ CSI-RS resources; or
forty-third information, indicating a spatial domain basis vector group corresponding to each of remaining CSI-RS resources other than M₈ CSI-RS resources in the Nₜₒₜ CSI-RS resources, and indicating L spatial domain basis vectors corresponding to each of the remaining CSI-RS resources based on the spatial domain basis vector group corresponding to each of the remaining CSI-RS resources.

23. The method of claim 14, wherein the PMIs corresponding to the Nₜₒₜ CSI-RS resources comprise:
forty-fourth information, indicating same L' spatial domain basis vectors in Nₜₒₜ groups each comprising L spatial domain basis vectors corresponding to the Nₜₒₜ CSI-RS resources, the L' spatial domain basis vectors being comprised in each group, remaining L-L' spatial domain basis vectors corresponding to each of the Nₜₒₜ CSI-RS resources, and indicating a value of L'.

24. The method of any one of claims 21 to 23, wherein the PMIs corresponding to the Nₜₒₜ CSI-RS resources comprise at least one of:
forty-fifth information, indicating same Mᵥ' frequency domain basis vectors in Nₜₒₜ groups each comprising Mᵥ frequency domain basis vectors corresponding to the Nₜₒₜ CSI-RS resources, the Mᵥ' frequency domain basis vectors being comprised in each group, remaining frequency domain basis vectors other than the Mᵥ' frequency domain basis vectors corresponding to each of the Nₜₒₜ CSI-RS resources, and indicating a value of Mᵥ';
forty-sixth information, indicating same Mᵥ frequency domain basis vectors corresponding to M₁₁ CSI-RS resources in the Nₜₒₜ CSI-RS resources;
forty-seventh information, indicating Mᵥ frequency domain basis vectors corresponding to each of remaining CSI-RS resources other than the M₁₁ CSI-RS resources in the Nₜₒₜ CSI-RS resources;
forty-eighth information, indicating a start point of a frequency domain basis vector window; or
forty-ninth information, indicating Mᵥ frequency domain basis vectors corresponding to each of the Nₜₒₜ CSI-RS resources based on a start point of a frequency domain basis vector window, a length of the frequency domain basis vector window being lower than a number N₃ of subbands.

25. The method of any one of claims 21 to 23, wherein one CSI-RS resource corresponds to one frequency domain basis vector window;
and the PMIs corresponding to the Nₜₒₜ CSI-RS resources comprise at least one of:
fiftieth information, indicating the same start point of frequency domain basis vector windows respectively corresponding to the Nₜₒₜ CSI-RS resources;
fifty-first information, indicating Mᵥ frequency domain basis vectors corresponding to each of the Nₜₒₜ CSI-RS resources based on the same start point corresponding to the Nₜₒₜ CSI-RS resources;
fifty-second information, indicating same Mᵥ' frequency domain basis vectors in Nₜₒₜ groups each comprising Mᵥ frequency domain basis vectors corresponding to the Nₜₒₜ CSI-RS resources based on the same start point corresponding to the Nₜₒₜ CSI-RS resources, the Mᵥ' frequency domain basis vectors being comprised in each group, remaining frequency domain basis vectors other than the Mᵥ' frequency domain basis vectors corresponding to each of the Nₜₒₜ CSI-RS resources, and indicating a value of Mᵥ';
fifty-third information, indicating same Mᵥ frequency domain basis vectors corresponding to the Nₜₒₜ CSI-RS resources based on the same start point corresponding to the Nₜₒₜ CSI-RS resources;
fifty-fourth information, indicating the same start point of frequency domain basis vector windows respectively corresponding to M₁₂ CSI-RS resources in the Nₜₒₜ CSI-RS resources;
fifty-fifth information, indicating Mᵥ frequency domain basis vectors corresponding to each of M₁₂ CSI-RS resources respectively based on the same start point corresponding to the M₁₂ CSI-RS resources;
fifty-sixth information, indicating start points of frequency domain basis vector windows respectively corresponding to remaining CSI-RS resources other than M₁₂ CSI-RS resources in the Nₜₒₜ CSI-RS resources;
fifty-seventh information, indicating Mᵥ frequency domain basis vectors corresponding to each of remaining CSI-RS resources based on start points of frequency domain basis vector windows respectively corresponding to the remaining CSI-RS resources other than M₁₂ CSI-RS resources;
fifty-eighth information, indicating whether start points of frequency domain basis vector windows respectively corresponding to the Nₜₒₜ CSI-RS resources are the same; or
fifty-ninth information, indicating whether Nₜₒₜ groups each comprising Mᵥ frequency domain basis vectors corresponding to the Nₜₒₜ CSI-RS resources are the same.

26. The method of claim 14, wherein the PMIs corresponding to the Nₜₒₜ CSI-RS resources comprise at least one of:
sixtieth information, indicating same K₁' ports in Nₜₒₜ group each comprising K₁ selected ports corresponding to the Nₜₒₜ CSI-RS resources, the K₁' ports being comprised in each group, remaining selected ports other than the K₁' ports corresponding to each of the Nₜₒₜ CSI-RS resources, and indicating a value of K₁';
sixty-first information, indicating same K₁' ports in M₁₃ groups each comprising K₁ selected ports corresponding to M₁₃ CSI-RS resources in the Nₜₒₜ CSI-RS resources, the K₁' ports being comprised in each group, remaining selected ports other than the K₁' ports corresponding to each of the M₁₃ CSI-RS resources, and indicating a value of K₁';
sixty-second information, indicating K₁ selected ports corresponding to each of remaining CSI-RS resources other than the M₁₃ CSI-RS resources in the Nₜₒₜ CSI-RS resources;
sixty-third information, indicating same K₁ selected ports corresponding to M₁₄ CSI-RS resources in the Nₜₒₜ CSI-RS resources; or
sixty-fourth information, indicating K₁ selected ports corresponding to each of remaining CSI-RS resources other than M₁₄ CSI-RS resources in the Nₜₒₜ CSI-RS resources.

27. A communication apparatus, comprising:
a transceiver module, configured to receive configuration information sent from a network device, wherein the configuration information is used to configure Kₛ channel state information-reference signal (CSI-RS) resources, wherein Kₛ is an integer greater than 1; and
wherein the transceiver module is further configured to send first information to the network device, wherein the first information comprises CSI-RS resource indication information, the CSI-RS resource indication information indicates Nₜₒₜ CSI-RS resources selected by the terminal, and the first information further comprises precoding matrix indicators (PMIs) corresponding to the Nₜₒₜ CSI-RS resources respectively, wherein Nₜₒₜ is an integer greater than 1 and Nₜₒₜ is less than or equal to Kₛ.

28. A communication apparatus, comprising:
a transceiver module, configured to send configuration information to a terminal, wherein the configuration information is used to configure Kₛ channel state information-reference signal (CSI-RS) resources, wherein Kₛ is an integer greater than 1; and
wherein the transceiver module is further configured to receive first information sent from a terminal, wherein the first information comprises CSI-RS resource indication information, the CSI-RS resource indication information indicates Nₜₒₜ CSI-RS resources selected by the terminal, and the first information further comprises precoding matrix indicators (PMIs) corresponding to the Nₜₒₜ CSI-RS resources respectively, wherein Nₜₒₜ is an integer greater than 1 and Nₜₒₜ is less than or equal to Kₛ.

29. A terminal, comprising:
one or more processors;
wherein the terminal is configured to perform the communication method of any one of claims 1 to 13.

30. A network device, comprising:
one or more processors;
wherein the network device is configured to perform the communication method of any one of claims 14 to 26.

31. A communication system, comprising a terminal and a network device, wherein the terminal is configured to perform the communication method of any one of claims 1 to 13, and the network device is configured to perform the communication method of any one of claims 14 to 26.

32. A storage medium storing instructions, wherein when the instructions are run on a communication device, the communication device is caused to perform the communication method of any one of claims 1 to 13 or any one of claims 14 to 26.
